# EUROPEAN PATENT SPECIFICATION

(11) **EP 2 595 216 B1**
(45) Date of publication and mention of the grant of the patent: **02.04.2014**
(21) Application number: 12193637.1
(22) Date of filing: 21.11.2012
(51) Int. Cl.: H01M 2/10

(54) **Battery pack and saddle type vehicle including the same**
Batteriepack und Sattelfahrzeug damit
Bloc batterie et véhicule à selle comprenant celui-ci

(30) Priority: 21.11.2011 JP 2011254427
(43) Date of publication of application: 22.05.2013
(73) Proprietor: Yamaha Hatsudoki Kabushiki Kaisha, Iwata-shi, Shizuoka 438-8501 (JP)
(72) Inventor: Itagaki, Takahiro, Iwata-shi Shizuoka 438-8501 (JP); Terada, Junji, Iwata-shi Shizuoka 438-8501 (JP); Iida, Hiroki, Iwata-shi Shizuoka (JP); Shima, Yoshinori, Iwata-shi Shizuoka (JP)
(74) Representative: Grünecker, Kinkeldey, Stockmair & Schwanhäusser

(56) References cited:
- EP-A1- 2 355 206
- US-A1- 2011 008 659

## Description

The present invention relates to a battery pack and a saddle type vehicle including the same. More specifically, the present invention relates to a battery pack including a plurality of rechargeable batteries, and a saddle type vehicle including the battery pack.

Conventionally, a large variety of battery packs are proposed for installation in vehicles. For example, JP-A 2001-114157 discloses a battery assembly which is to be installed in a vehicle in a direction extending in a fore-aft direction. Namely, this is a horizontal type battery assembly. The battery assembly in JP-A 2001-114157 has a battery unit and a battery box which houses the battery unit. The battery box has a bottom surface, which is supported elastically by a body frame of an electric vehicle, via a damper, a front receiver plate and a rear receiver plate. Meanwhile, JP-A 2004-74911, for example, discloses a vehicle-mounted battery which is to be installed in a vehicle in a direction extending in an up-down direction. Namely, this is a vertical type vehicle-mounted battery. The vehicle-mounted battery in JP-A 2004-74911 has a secondary battery, a battery control circuit portion, and a battery case. The battery case has a battery chamber for independent storage of the secondary battery, and a battery control chamber for independent storage of the battery control circuit portion. The battery case has a bottom portion, which is supported by a body frame of an electric motor cycle via a battery support tray.

As described, a battery pack which is installed in a vehicle is supported by the vehicle's body frame regardless of the direction in which the battery pack is disposed (whether it is a horizontal type as disclosed in JP-A 2001-114157 for example, or it is a vertical type as disclosed in JP-A 2004-74911 for example). Since battery packs are generally heavy objects, a case of the battery pack is subject to a heavy load applied from outside (the body frame) of the battery pack when, for example, the vehicle is accelerating, decelerating or when the vehicle receives a gravitational load. For example, in the battery assembly disclosed in JP-A 2001-114157, a load from the body frame is applied in an up-down direction to the battery box via the front receiver plate, the rear receiver plate and the damper. As another example, in the vehicle-mounted battery disclosed in JP-A 2004-74911, a load from the body frame is applied in an up-down direction to the battery case via the battery support tray.

Battery packs such as those described above are becoming popular in recent years for use in small electric vehicles, and there is a requirement for weight reduction in the battery packs. One idea for reducing the weight of the battery pack is to use resin (plastic, for example) as a material to form the case in which a plurality of batteries are stored.

Now, in the horizontal type battery pack such as the battery assembly disclosed in JP-A 2001-114157, normally, the case for encasing a plurality of batteries has a split design so that the case is composed of an upper and a lower case members to provide a large opening for ease of manufacturing the battery pack. When the split design using an upper and a lower case members as described above is employed for the case, it is possible to give sufficient stiffness in the up-down direction at a portion where the upper case member and a lower case member are connected with each other. Thus, even if there is a large load applied to the case in the up-down direction from outside, it is possible to prevent excessive deformation of the connecting portion between the upper case member and the lower case member. Sometimes, however, due to vehicle design or other reasons, it becomes impossible to support the case in its bottom surface, and the case must be supported in its left and right side walls or front and rear side walls. In such a case, the case is subject to a load in the left-right direction or the fore-aft direction from outside. This can cause a problem that the connecting portion between the upper case member and the lower case member is deformed by the load, resulting in poor waterproofing performance. The problem is greater and the connecting portion is deformed more easily if the case is made of a resin which has a modest level of stiffness.

Case deformation would be prevented and case waterproofing performance would be improved if the case is made thicker to have an increased level of stiffness. However, if the thickness of the case is increased, the battery pack's heat radiation performance is decreased.

On the other hand, in the vertical type battery pack such as the vehicle-mounted battery disclosed in JP-A 2004-74911, normally, the case for encasing a plurality of batteries has a split design so that the case is composed of a left and a right (or front and rear) case members to provide a large opening for ease of manufacturing the battery pack. In such a split design in which the case is divided into the left and the right (or front and rear) case members, the portion where the left case member (or the front case member) and the right case member (or the rear case member) are connected with each other has a lower stiffness in the up-down direction than the stiffness in the same direction of the connecting portion of the case of the other split design described earlier in which the case is composed of an upper and a lower case members. Thus, there can be a problem that an outside load in the up-down direction applied to the case will deform the connecting portion between the left case member (or the front case member) and the right case member (or the rear case member), resulting in poor waterproofing performance of the case. The problem is greater and the connecting portion is deformed more easily if the case is made of a resin which has a modest level of stiffness.

Like in the horizontal type battery pack described earlier, case deformation would be prevented and case waterproofing performance would be improved if the case is made thicker so that the case would have an increased level of stiffness. As has been discussed, however, if the thickness of the case is increased, the battery pack's heat radiation performance is decreased. A prior art battery pack is taught by EP 2355206.

### SUMMARY OF THE INVENTION

Therefore, a primary object of the present invention is to provide a battery pack having an excellent heat radiation performance, being light in weight and capable of keeping its waterproofing performance even if the case is subjected to an outside load. Another primary object is to provide a saddle type vehicle including the battery pack. The invention is defined in claim 1.

According to an aspect of the present invention, there is provided a battery pack which includes a plurality of rechargeable batteries arranged in a plurality of rows across a first direction as well as in a plurality of columns across a second direction which is perpendicular to the first direction; a battery holding portion for holding the batteries; a case including a first case member and a second case member which are assembled with each other in a third direction perpendicular to both of the first direction and the second direction, for encasing the batteries and the battery holding portion; and an annular seal member sandwiched by the first case member and the second case member. With the above, at least one of the first case member and the second case member includes an outer surface having a load receiving portion for receiving a load from outside of the battery pack; the first case member includes a plate-like first side wall portion across the third direction, and a frame-like first circumferential wall portion protruding from an outer circumferential edge portion of the first side wall portion toward the second case member; the second case member includes a plate-like second side wall portion across the third direction, and a frame-like second circumferential wall portion protruding from an outer circumferential edge portion of the second side wall portion toward the first case member; the second circumferential wall portion has an annular salient protruding toward the first case member; the first circumferential wall portion has an annular recess for holding the salient and the seal member, and the salient of the second circumferential wall portion has a maximum thickness greater than a thickness of the first side wall portion as well as greater than a thickness of the second side wall portion.

It should be noted here that "the first side wall portion across the third direction" includes not only a first side wall portion which is perpendicular to the third direction but also any first side wall portion which is slanted with respect to the third direction. The same applies to the second side wall portion. "Plate-like first side wall portion" includes not only flat and plate-like first side wall portions but also any first side wall portions which have protrusions and/or recesses. The same applies to the second side wall portion. The salient may be entirely fitted in the recess, or part of the salient (for example, a base portion of the salient) may be out of the recess.

"The maximum thickness of the salient" refers to a maximum thickness of the part of the salient which is inside the recess.

"The thickness of the first side wall portion" may be calculated, for example, as an average thickness of a region in the first side wall portion which, in a view from the third direction, overlaps the battery holding portion's first side-surface portion (i.e., a side-surface portion facing the first side wall portion in the third direction). "The thickness of the second side wall portion" may be calculated, for example, as an average thickness of a region in the second side wall portion which, in a view from the third direction, overlaps the battery holding portion's second side-surface portion (i.e. a side-surface portion facing the second side wall portion in the third direction).

"A plurality of rechargeable batteries arranged in a plurality of rows across a first direction as well as in a plurality of columns across a second direction which is perpendicular to the first direction" includes not only a plurality of batteries arranged in a grid pattern but also those arranged in a staggering (honeycomb) pattern. Therefore, batteries in each column should be placed at least in the first direction but need not be in a straight line. For example, batteries in each column may be placed in a zigzag pattern along the first direction. Also, batteries in each row should be placed at least in the second direction but need not be in a straight line. For example, batteries in each row may be placed in a zigzag pattern along the second direction.

In the battery pack according to the present invention, the first case member and the second case member are fitted to each other so that the seal member and the salient of the second circumferential wall portion are captured in the recess of the first circumferential wall portion. At least one of the first case member and the second case member has, on its outer surface, the load receiving portion for receiving a load from outside of the battery pack. When this battery pack is mounted on a vehicle, an outer surface of the case of the battery pack, for example, is supported by the vehicle's frame via a support member. In this case, a region of the case's outer surface which makes contact with the support member functions as the load receiving portion, and load from outside of the battery pack (load from the support member) is applied to the load receiving portion of the case. Now, in the present battery pack, the salient of the second circumferential wall portion has a maximum thickness which is greater than a thickness of the first side wall portion of the first case member as well as greater than a thickness of the second side wall portion of the second case member. By giving an increased thickness to the salient as described, it becomes possible to increase stiffness of a connecting portion where the first case member and the second case member are connected with each other. With this arrangement, even if there is a load applied from outside to the case, it is possible to reduce deformation of the case, and so it is possible to ensure sufficient waterproofing performance of the battery pack. Also, by increasing the thickness of the salient, it is possible to provide sufficient stiffness in the connecting portion where the first case member and the second case member are connected with each other even if the first case member and the second case member are formed of a light-weight material (resin, for example). Therefore, it is possible to reduce the weight of the case while ensuring strength of the case. Also, since it is possible to ensure the strength of the case by increasing the thickness of the salient, there is no need for increasing the thickness of the first side wall portion or the second side wall portion for ensuring the strength of the case. This prevents decrease in heat radiation performance of the case.

The first case member and the second case member are assembled with each other by connecting the first circumferential wall portion and the second circumferential wall portion with each other. In this case, it is possible to increase stiffness of the case sufficiently by giving appropriate thicknesses to the first circumferential wall portion and the second circumferential wall portion even if the thicknesses of the first side wall portion of the first case member and the second side wall portion of the second case member are reduced. This makes it possible to improve heat radiation performance of the case while ensuring sufficient strength of the case.

The first side wall portion of the first case member and the second side wall portion of the second case member are across the third direction. In other words, each of the first side wall portion and the second side wall portion extends at least in the first direction and the second direction. In the present battery pack, the batteries are arranged in a plurality of rows across the first direction as well as in a plurality of columns across the second direction. In this case, the case has increased dimensions in the first direction and in the second direction, so the first side wall portion and the second side wall portion which extend in the first direction and the second direction also have increased areas. This increases the amount of heat released from the first side wall portion and the second side wall portion, so the arrangement makes it possible to improve heat radiation performance of the case.

Generally, the case of a battery pack is designed as an assembly of two or a greater number of members for ease of manufacture of the battery pack. In the present battery pack, the case is divided at least into the first case member and the second case member in the third direction, so it is not necessary to divide the case in the first direction or in the second direction. Therefore, it is not necessary to divide the first side wall portion of the first case member and the second side wall portion of the second case member in the first direction or the second direction. In this case, the first side wall portion and the second side wall portion have improved heat conductivity than in the case where the first side wall portion and the second side wall portion are divided. This increases the amount of heat released from the first side wall portion and the second side wall portion, so the arrangement makes it possible to improve heat radiation performance of the case.

The load receiving portion is provided on an outer surface of at least one of the first case member and the second case member. Specifically, the outer surface of the case includes the load receiving portion. As has been described earlier, it is possible to ensure sufficient strength of the case in the present battery pack. Therefore, it is possible to sufficiently reduce deformation of the case by providing the load receiving portion on the outer surface of the case regardless of the direction in which the battery pack is disposed (horizontal or vertical, for example).

As a result of the above, according to the present invention, it is possible to sufficiently ensure heat radiation performance of the battery pack; to reduce weight of the battery pack itself; and to ensure sufficient waterproofing performance of the battery pack even if load is applied externally to the case.

Preferably, at least one of the first case member and the second case member which includes the load receiving portion has an inner surface having a load transmitting portion for transmitting the load received by the load receiving portion to the battery holding portion. In other words, at least one of the first case member and the second case member has a load receiving portion on its outer surface and a load transmitting portion on its inner surface. In this case, external load which the first case member or the second case member receives at its load receiving portion is transmitted to the battery holding portion via the load transmitting portion. In other words, at least one of the first case member and the second case member is supported by the battery holding portion at the load transmitting portion. This further reduces deformation of the case.

It should be noted here that in the present invention, a region of the case's inner surface supported by the battery holding portion functions as the load transmitting portion. For example, in a case where the battery holding portion includes a buffer member, a heat conducting member, etc. on its outer circumferential portion, and supports the case's inner surface via such members, then a region of the case's inner surface which makes contact with such members functions as the load transmitting portion.

Further preferably, at least one of the first side wall portion and the second side wall portion is fixed to the battery holding portion. In this case, it is possible to sufficiently increase stiffness of the case. Since this sufficiently reduces deformation of the case, it is possible to further improve waterproofing performance of the battery pack. Also, it is possible to transmit heat which is generated in the batteries, efficiently from the battery holding portion to the case (at least one of the first side wall portion and the second side wall portion). This makes it possible to further improve heat radiation performance of the battery pack.

Further, preferably, at least one of the first circumferential wall portion and the second circumferential wall portion has the load receiving portion. In this case, it is possible to receive load which is externally applied to the case by at least one of the first circumferential wall portion and the second circumferential wall portion. In other words, it is possible to receive external load from outside to the case, at a region near a connecting portion where the first case member and the second case member are connected with each other. As described, in the battery pack according to the present invention, sufficiently high stiffness is ensured at the connecting portion between the first case member and the second case member. Therefore, it is possible to sufficiently reduce deformation of the case by receiving the load which is applied from outside to the case, at a region near the connecting portion between the first case member and the second case member.

Preferably, each of the first circumferential wall portion and the second circumferential wall portion has the load receiving portion. In this case, it is possible to receive load, which applied from outside of the case, by the first circumferential wall portion and the second circumferential wall portion. In other words, it is possible to receive external load which is applied to the case from outside thereof, in a distributed fashion by the first case member and the second case member. This prevents situations where there is significant difference in the amount of load transmitted from outside to the first case member and to the second case member, and therefore prevents situations where there is significant difference in the amount of deformation caused in the first case member and in the second case member. As a result, it is possible to sufficiently reduce decrease in waterproofing performance at the connecting portion between the first case member and the second case member. This makes it possible to sufficiently improve waterproofing performance of the battery pack.

Further preferably, the first case member has an inner surface having a first load transmitting portion for transmitting a load received by the load receiving portion of the first circumferential wall portion to the battery holding portion, whereas the second case member has an inner surface having a second load transmitting portion for transmitting a load received by the load receiving portion of the second circumferential wall portion to the battery holding portion. In this case, load externally applied to the first case member (the first circumferential wall portion) is transmitted to the battery holding portion via the first load transmitting portion, whereas load externally applied to the second case member (the second circumferential wall portion) is transmitted to the battery holding portion via the second load transmitting portion. In other words, the first case member is supported by the battery holding portion at the first load transmitting portion, whereas the second case member is supported by the battery holding portion at the second load transmitting portion. By supporting both of the first case member and the second case member by the battery holding portion, it becomes possible to sufficiently reduce deformation of the first case member and the second case member.

Further, preferably, the seal member has a circular section when there is no force being applied externally thereto, and the section of the seal member has a greater diameter than a maximum thickness of the salient in the second circumferential wall portion when there is no force being applied externally to the seal member. In this case, waterproofing performance between the recess in the first circumferential wall portion and the salient in the second circumferential wall portion is sufficiently improved by the seal member.

Preferably, the seal member is sandwiched by a bottom portion of the recess and a tip portion of the salient. In this case, it is possible to reliably hold the seal member by the bottom portion of the recess and the tip portion of the salient, and so it is possible to further improve waterproofing performance between the recess and the salient.

In recent years, saddle type vehicles including a battery pack are proposed. For improved reliability and ease of manufacture of such saddle type vehicles, it is preferable that the battery pack has an improved heat radiation performance and waterproofing performance, and that the battery pack has a reduced weight. Therefore, the battery pack according to the present invention, which is superior in heat radiation performance and waterproofing performance and is light in weight, is suitably applicable to saddle type vehicles.

The above-described objects and other objects, characteristics, aspects and advantages of the present invention will become clearer from the following detailed description of embodiments of the present invention with reference to the attached drawings.

### BRIEF DESCRIPTION OF THE DRAWINGS

Fig. 1 is a side view of a scooter according to an embodiment of the present invention.
Fig. 2 is a side view, showing the scooter with its body cover removed.
Fig. 3 is a perspective view, showing an external appearance of a battery pack.
Fig. 4 is an exploded perspective view of the battery pack.
Fig. 5 is an illustrative sectional view showing an internal structure of the battery pack.
Fig. 6 is an illustrative sectional view showing an internal structure of the battery pack.
Fig. 7 shows a relationship between a circumferential wall portion and a seal member.
Fig. 8 shows a case member viewed from a side.
Fig. 9 shows a relationship between the battery pack and support members.
Fig. 10 shows another example of the relationship between a circumferential wall portion and a seal member.

### DETAILED DESCRIPTION OF THE PREFERRED EMBODIMENTS

Hereinafter, embodiments of the present invention will be described with reference to the drawings. The description will cover a case where a battery pack 40 according to an embodiment of the present invention is installed in a scooter 10 as an example of saddle type vehicles. It is noted that the terms front and rear, right and left, up and down as used in describing the scooter 10 are determined from the rider's position on a seat 38 of the scooter 10, with the rider facing toward a handlebar 32.

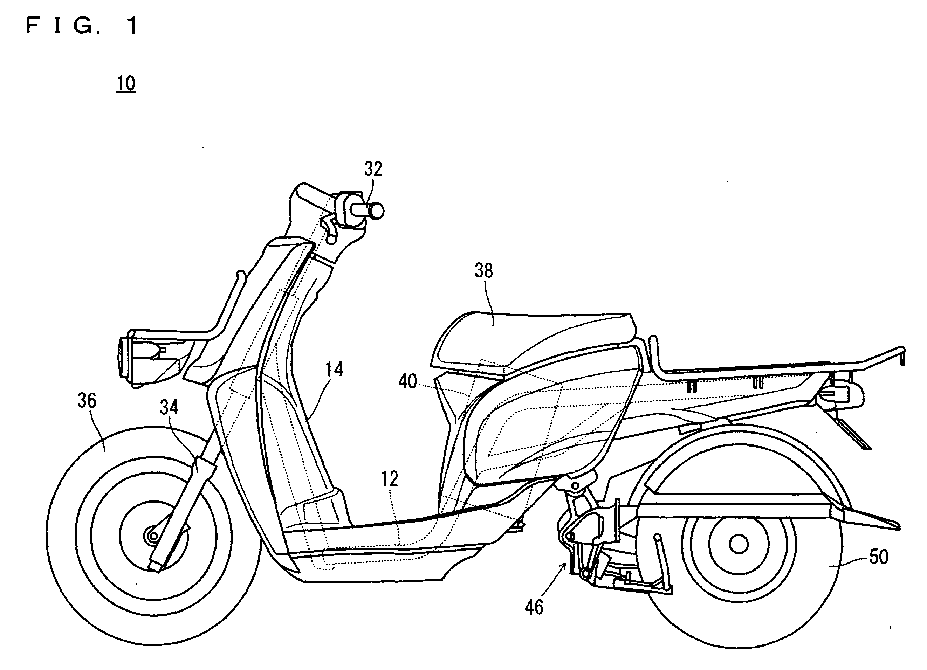

Fig. 1 is a side view of the scooter 10. The scooter 10 includes a body frame 12 and a body cover 14. It should be noted here that in Fig. 1, the body frame 12 is drawn in a simplified manner in order to avoid complication in the drawing.

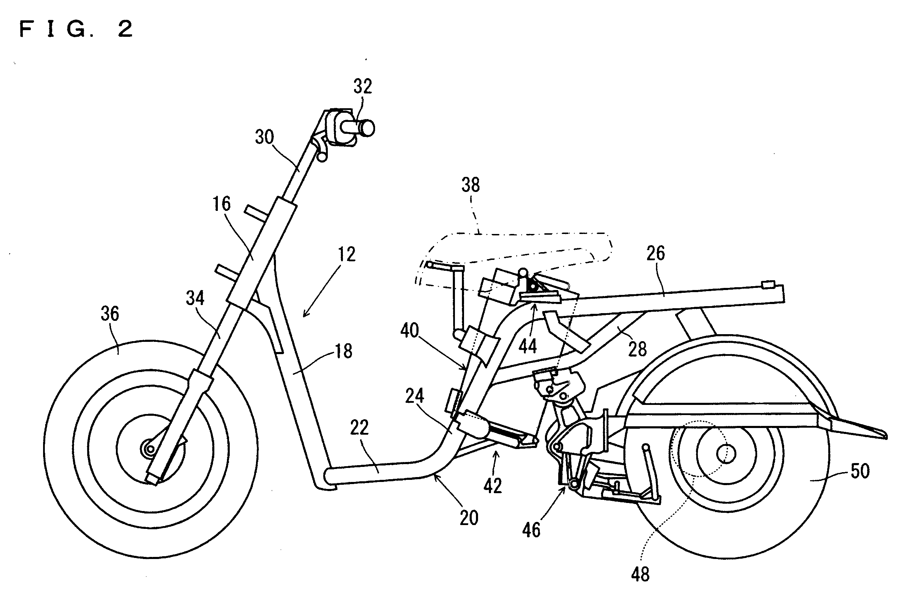

Fig. 2 is a side view, showing the scooter 10 with its body cover 14 removed.

Referring to Fig. 2, the body frame 12 includes a head pipe 16; a front frame 18 extending from the head pipe 16 obliquely in a rearward and downward direction; and a pair of rear frames 20 (Fig. 2 shows only one rear frame 20 on the left side) extending rearward from a lower end portion of the front frame 18. The rear frames 20 extend side by side, being spaced from each other in a width direction (left-right direction) of the scooter 10.

Each of the rear frames 20 includes a first frame portion 22 extending rearward from the lower end portion of the front frame 18; a second frame portion 24 extending obliquely in an upward direction from a rear end portion of the first frame portion 22 ; a third frame portion 26 extending rearward from an upper end portion of the second frame portion 24 ; and a fourth frame portion 28 connecting the second frame portion 24 and the third frame portion 26 with each other. The fourth frame portion 28 extends from the second frame portion 24 obliquely in a rearward and upward direction to connect a middle portion of the second frame portion 24 in terms of the up-down direction with a middle portion of the third frame portion 26 in terms of the fore-aft direction.

A steering shaft 30 is inserted pivotably through the head pipe 16. The steering shaft 30 has an upper end portion, where a handlebar 32 is attached. The steering shaft 30 has a lower end portion where a front fork 34 is attached. The front fork 34 has lower end portions, supporting a front wheel 36 rotatably.

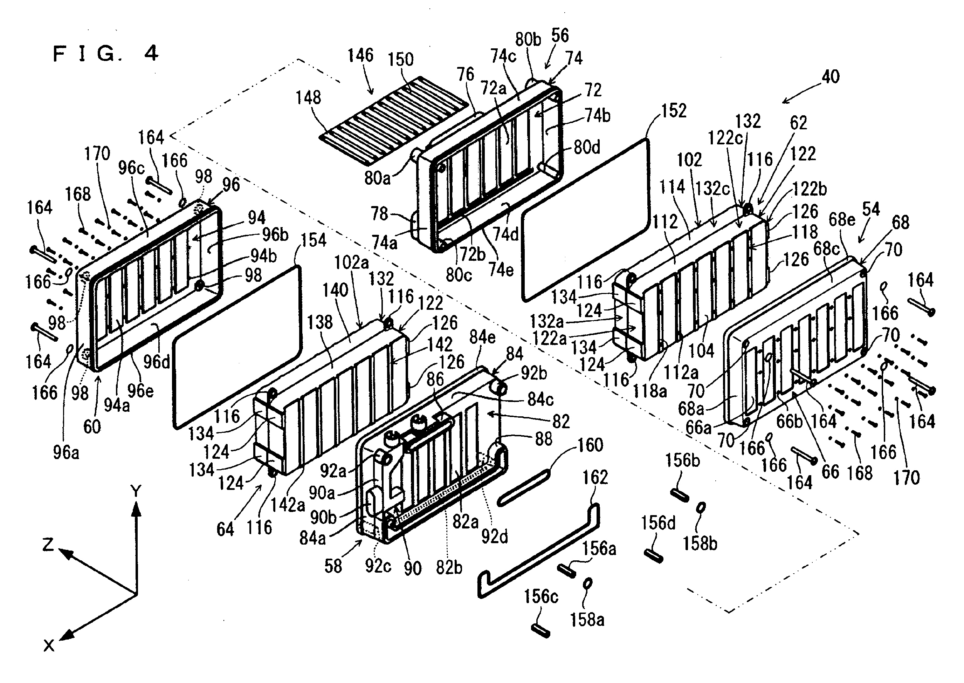

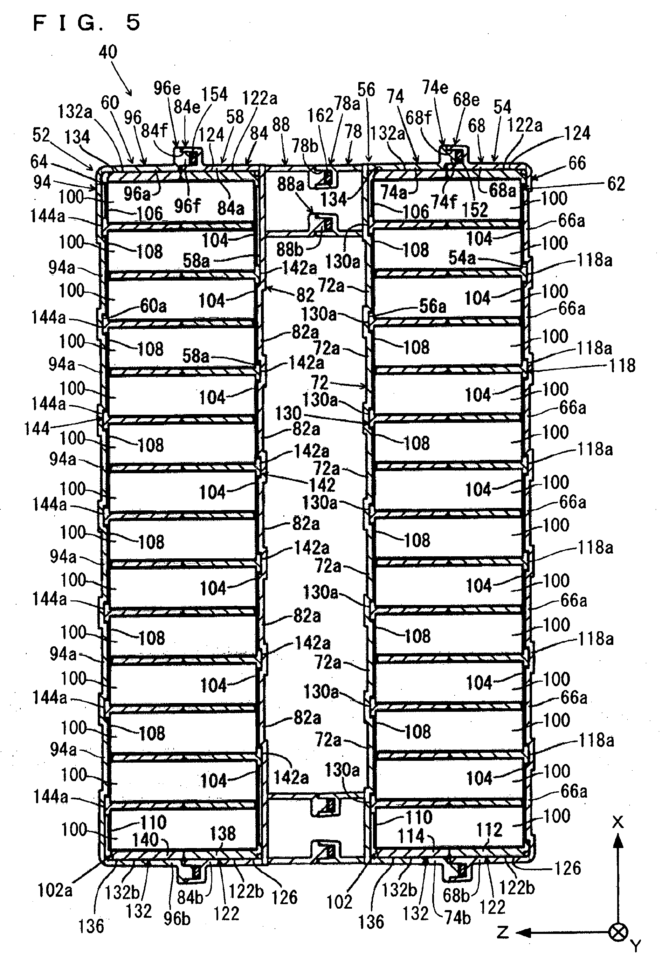

A seat 38 is provided above the second frame portion 24. Below the seat 38, the rear frames 20 support the battery pack 40. More specifically, the battery pack 40 is supported by the rear frames 20 via a support member 42 provided at a lower end portion of the second frame portion 24 and a support member 44 provided at a front end portion of the third frame portion 26. In the present embodiment, the battery pack 40 is tilted rearward when it is onboard. More specifically, the battery pack 40 is disposed with its first wall portions 68a, 74a, 84a, 96a (see Fig. 4; to be described later) facing obliquely in an upward and rearward direction and its second wall portions 68b, 74b, 84b, 96b (see Fig. 5; to be described later) facing obliquely in an downward and forward direction. Also, the battery pack 40 is disposed with its side wall portion 66 (see Fig. 4; to be described later) facing leftward while its side wall portion 94 (see Fig. 4; to be described later) facing rightward.

The fourth frame portion 28 supports a swing unit 46 rotatably. The swing unit 46 includes an electric motor 48 and a rear wheel 50. In the scooter 10, the electric motor 48 is driven by electric power supplied from the battery pack 40, and an output from the electric motor 48 drives the rear wheel 50.

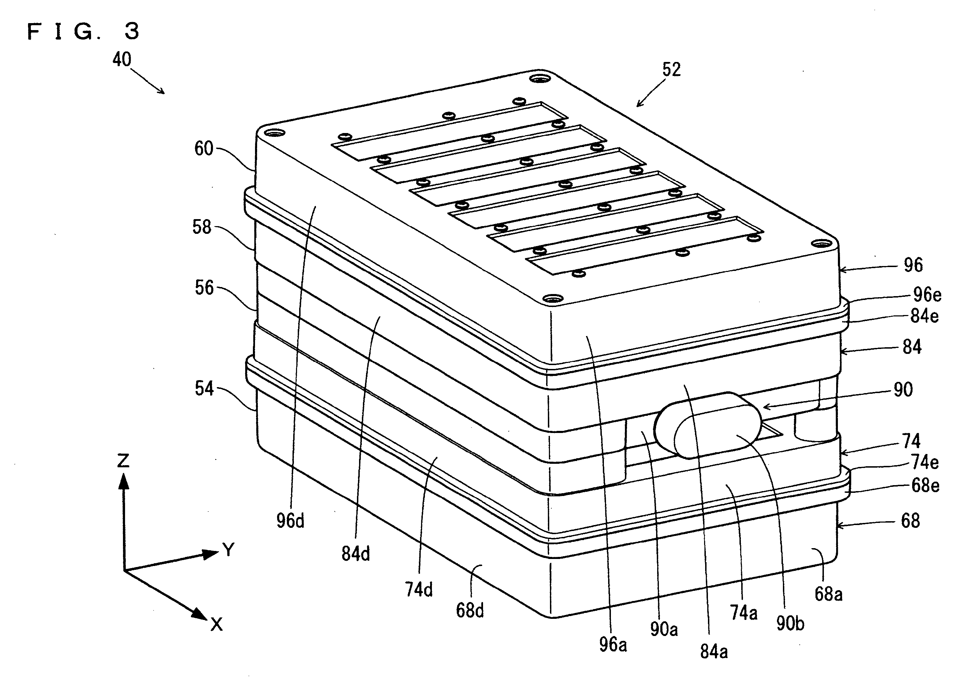

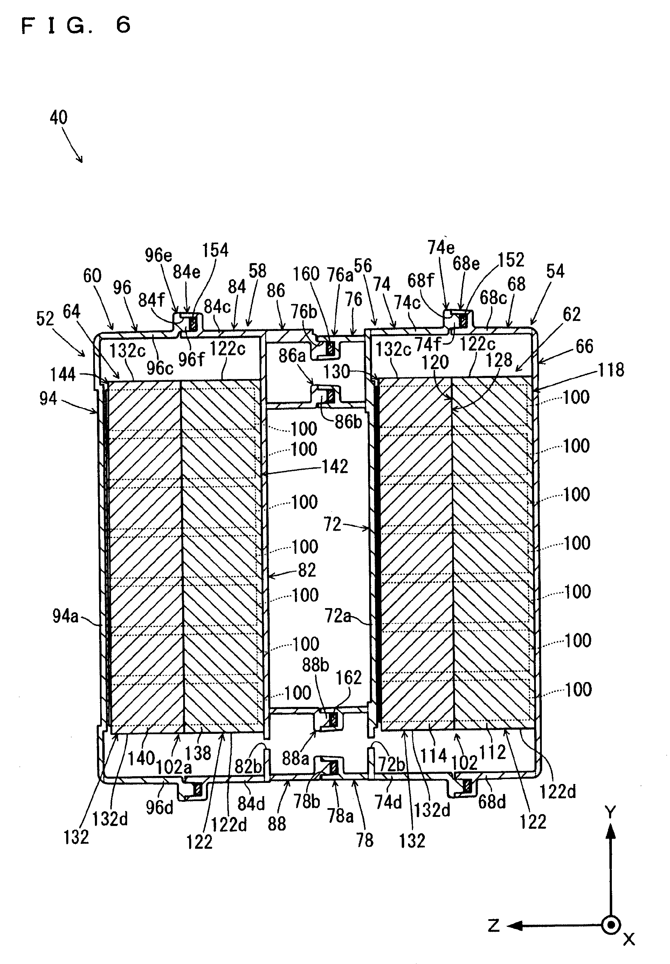

Fig. 3 is a perspective view which shows an external appearance of the battery pack 40, Fig. 4 is an exploded perspective view of the battery pack 40, and Fig. 5 and Fig. 6 are illustrative sectional views, showing an internal structure of the battery pack 40. It should be noted here that in Fig. 4 through Fig. 6, components of the battery pack 40 are drawn in a simplified manner in order to avoid complication in the drawing. Also, Fig. 3 and the figures thereafter are accompanied with arrows which indicate mutually perpendicular three directions X, Y and Z for clear understanding of positional relationships of components of the battery pack 40. In the present embodiment, the X direction represents the first direction, the Y direction represents the second direction and the Z direction represents the third direction. Also, in the present embodiment, the X direction is in parallel to a longitudinal direction (lengthwise direction) of the side wall portions 66, 72, 82, 94 to be described later, whereas the Y direction is in parallel to a lateral direction (widthwise direction) of the side wall portions 66, 72, 82, 94.

Referring to Fig. 3, the battery pack 40 includes a case 52. The case 52 is of a split design, including a plurality of case members each representing part of the case 52 as divided in the Z direction. In the present embodiment, the case 52 includes four case members 54, 56, 58, 60 divided in the Z direction. The case members 54, 56, 58, 60 are formed of resin for example. In the present embodiment, the case member 54 and the case member 58 each represent the first case member, whereas the case member 56 and the case member 60 each represent the second case member.

Referring to Fig. 4 through Fig. 6, the battery pack 40 further includes a first battery unit 62 and a second battery unit 64. The first battery unit 62 and the second battery unit 64 are encased in the case 52. More specifically, the first battery unit 62 is placed between the case member 54 and the case member 56, whereas the second battery unit 64 is placed between the case member 58 and the case member 60.

The case member 54 has a plate-like and generally rectangular (or rectangular) side wall portion 66; a frame-like circumferential wall portion 68 protruding from an outer circumferential edge of the side wall portion 66 toward the case member 56; and boss portions 70 (see Fig. 4) each formed at one of four corners of the side wall portion 66.

The side wall portion 66 is across the Z direction. The side wall portion 66 has a plurality of protrusions 66a (see Fig. 4 and Fig. 5) protruding toward the first battery unit 62 and a plurality of through-holes 66b (see Fig. 4). The protrusions 66a are generally rectangular (or rectangular) when viewed from the first battery unit 62 side (in a view from the Z direction). The protrusions 66a are generally rectangular (or rectangular) regions in the side wall portion 66, which look like being pressed out toward the first battery unit 62. Referring to Fig. 4, in the present embodiment, a plurality of the protrusions 66a and a plurality of through-holes 66b are arranged so that one protrusion 66a and three through-holes 66b alternate each other in the X direction.

Referring to Fig. 4 through Fig. 6, the circumferential wall portion 68 includes a first wall portion 68a and a second wall portion 68b opposing to each other in the X direction, and a third wall portion 68c and a fourth wall portion 68d opposing to each other in the Y direction. Referring to Fig. 5 and Fig. 6, the circumferential wall portion 68 has a recess 68f at an edge portion 68e on the case member 56 side. The recess 68f is annular when viewed from the case member 56 side (in a view from the Z direction). The recess 68f opens toward the case member 56.

In the present embodiment, the side wall portion 66 has a larger area in a view from the Z direction than whichever area of the first wall portion 68a in a view from the X direction, of the second wall portion 68b in a view from the X direction, of the third wall portion 68c in a view from the Y direction and of the fourth wall portion 68d in a view from the Y direction. In other words, an outer surface area of the first wall portion 68a, an outer surface area of the second wall portion 68b, an outer surface area of the third wall portion 68c and an outer surface area of the fourth wall portion 68d are all smaller than the outer surface area of the side wall portion 66. An area of the first wall portion 68a in a view from the X direction and an area of the second wall portion 68b in a view from the X direction are each smaller than an area of the third wall portion 68c in a view from the Y direction, as well as than an area of the fourth wall portion 68d in a view from the Y direction. A length of the first wall portion 68a in the Y direction and a length of the second wall portion 68b in the Y direction are each shorter than a length of the third wall portion 68c in the X direction as well as than a length of the fourth wall portion 68d in the X direction.

Referring to Fig. 4 through Fig. 6, the case member 56 has a plate-like, generally rectangular (or rectangular) side wall portion 72, a frame-like circumferential wall portion 74 protruding from an outer circumferential edge of the side wall portion 72 toward the case member 54, hollow connecting portions 76, 78 protruding from the side wall portion 72 toward the case member 58, and boss portions 80a, 80b, 80c, 80d (see Fig. 4) at four corners of the side wall portion 72. The connecting portion 76 is shaped correspondingly to a connecting portion 86, which will be described later, of the case member 58, whereas the connecting portion 78 is shaped correspondingly to a connecting portion 88, which will be described later, of the case member 58.

In the present embodiment, the side wall portion 66 and a side wall portion 82 which will be described later each represent the first side wall portion; the side wall portion 72 and a side wall portion 94 which will be described later each represent the second side wall portion; the circumferential wall portion 68 and a circumferential wall portion 84 which will be described later each represent the first circumferential wall portion; and the circumferential wall portion 74 and a circumferential wall portion 96 which will be described later each represent the second circumferential wall portion.

The side wall portion 72 is across the Z direction. The side wall portion 72 has a plurality of protrusions 72a protruding toward the first battery unit 62, and a through-hole 72b (see Fig. 4 and Fig. 6) extending in the X direction along one of the long sides of the side wall portion 72. The protrusions 72a have the same shape as the protrusions 66a. Referring to Fig. 6, the through-hole 72b is on an inner side of the connecting portion 78 when viewed from the case member 58 side (in a view from the Z direction).

Referring to Fig. 4 through Fig. 6, the circumferential wall portion 74 includes a first wall portion 74a and a second wall portion 74b opposing to each other in the X direction, and a third wall portion 74c and a fourth wall portion 74d opposing to each other in the Y direction. Referring to Fig. 5 and Fig. 6, the circumferential wall portion 74 has a salient 74f at an edge portion 74e on the case member 54 side. The salient 74f is annular when viewed from the case member 54 side (in a view from the Z direction). The salient 74f protrudes toward the case member 54.

Referring to Fig. 6, the connecting portion 76 has a recess 76b at an edge portion 76a on the case member 58 side. The recess 76b is a loop when viewed from the case member 58 (in a view from the Z direction). The recess 76b opens toward the case member 58. Referring to Fig. 5 and Fig. 6, the connecting portion 78 has a recess 78b at an edge portion 78a on the case member 58 side. The recess 78b is a loop when viewed from the case member 58 (in a view from the Z direction). The recess 78b opens toward the case member 58.

Referring to Fig. 4, in the present embodiment, the side wall portion 72 has a larger area in a view from the Z direction than whichever area of the first wall portion 74a in a view from the X direction, of the second wall portion 74b in a view from the X direction, of the third wall portion 74c in a view from the Y direction and of the fourth wall portion 74d in a view from the Y direction. In other words, an outer surface area of the first wall portion 74a, an outer surface area of the second wall portion 74b, an outer surface area of the third wall portion 74c and an outer surface area of the fourth wall portion 74d are all smaller than an outer surface area of the side wall portion 72. An area of the first wall portion 74a in a view from the X direction and an area of the second wall portion 74b in a view from the X direction are each smaller than an area of the third wall portion 74c in a view from the Y direction, as well as than an area of the fourth wall portion 74d in a view from the Y direction. A length of the first wall portion 74a in the Y direction and a length of the second wall portion 74b in the Y direction are each shorter than a length of the third wall portion 74c in the X direction as well as than a length of the fourth wall portion 74d in the X direction.

Referring to Fig. 4 through Fig. 6, the case member 58 has a plate-like, generally rectangular (or rectangular) side wall portion 82, a frame-like circumferential wall portion 84 protruding from an outer circumferential edge of the side wall portion 82 toward the case member 60, hollow connecting portions 86, 88 protruding from the side wall portion 82 toward the case member 56, a disconnecting portion 90 protruding from the side wall portion 82 toward the case member 56, and boss portions 92a, 92b, 92c, 92d (see Fig. 4) at four corners of the side wall portion 82.

The side wall portion 82 is across the Z direction. The side wall portion 82 has a plurality of protrusions 82a (see Fig. 4 and Fig. 5) protruding toward the second battery unit 64, and a through-hole 82b (see Fig. 4 and Fig. 6) extending in the X direction along one of the long sides of the side wall portion 82. The protrusions 82a have the same shape as the protrusions 66a. Referring to Fig. 6, the through-hole 82b is on an inner side of the connecting portion 88 when viewed from the case member 56 side (in a view from the Z direction) .

Referring to Fig. 4 through Fig. 6, the circumferential wall portion 84 includes a first wall portion 84a and a second wall portion 84b opposing to each other in the X direction, and a third wall portion 84c and a fourth wall portion 84d opposing to each other in the Y direction. Referring to Fig. 5 and Fig. 6, the circumferential wall portion 84 has a recess 84f at an edge portion 84e on the case member 60 side. The recess 84f is a loop when viewed from the case member 60 side (in a view from the Z direction). The recess 84f opens toward the case member 60.

Referring to Fig. 6, the connecting portion 86 has a salient 86b at an edge portion 86a on the case member 56 side. The salient 86b is a loop when viewed from the case member 56 side (in a view from the Z direction). The salient 86b protrudes toward the case member 56. Referring to Fig. 5 and Fig. 6, the connecting portion 88 has a salient 88b at an edge portion 88a on the case member 56 side. The salient 88b is a loop when viewed from the case member 56 side (in a view from the Z direction). The salient 88b protrudes toward the case member 56.

In the present embodiment, the side wall portion 82 has a larger area in a view from the Z direction than whichever area of the first wall portion 84a in a view from the X direction, of the second wall portion 84b in a view from the X direction, of the third wall portion 84c in a view from the Y direction and of the fourth wall portion 84d in a view from the Y direction. In other words, an outer surface area of the first wall portion 84a, an outer surface area of the second wall portion 84b, an outer surface area of the third wall portion 84c and an outer surface area of the fourth wall portion 84d are all smaller than an outer surface area of the side wall portion 82. An area of the first wall portion 84a in a view from the X direction and an area of the second wall portion 84b in a view from the X direction are each smaller than an area of the third wall portion 84c in a view from the Y direction, as well as than an area of the fourth wall portion 84d in a view from the Y direction. A length of the first wall portion 84a in the Y direction and a length of the second wall portion 84b in the Y direction are each shorter than a length of the third wall portion 84c in the X direction as well as than a length of the fourth wall portion 84d in the X direction.

Referring to Fig. 3 and Fig. 4, though not very much will be detailed, the disconnecting portion 90 includes a housing portion 90a which protrudes from the side wall portion 82 toward the case member 56 and is generally C-shaped in a side view (in a view from the Z direction) ; at least a pair of conductor members (not illustrated) housed in the housing portion 90a; and a service plug 90b which is detachable from and attachable to the housing portion 90a. In the present embodiment, if the service plug 90b is attached in the housing portion 90a, the above-described pair of conductor members are electrically in connection with each other by the service plug 90b. By removing the service plug 90b from the housing portion 90a, the electrical connection between the conductor members is disconnected. Also, in the present embodiment, the battery pack 40 has a positive power-supply terminal (not illustrated) and a negative power-supply terminal (not illustrated), which are electrically connected with each other via the first battery unit 62, a plurality of conductor members 150 in a connecting unit 146 which will be described later, the second battery unit 64, and the disconnecting portion 90 (more specifically, the above-described pair of conductor members and the service plug 90b). Therefore, in the battery pack 40, attaching the service plug 90b to the housing portion 90a establishes electrical connection between the positive power-supply terminal and the negative power-supply terminal, whereas removing the service plug 90b from the housing portion 90a disconnects the electrical connection between the positive power-supply terminal and the negative power-supply terminal.

Referring to Fig. 4 through Fig. 6, the case member 60 has a plate-like and generally rectangular (or rectangular) side wall portion 94; a frame-like circumferential wall portion 96 protruding from an outer circumferential edge of the side wall portion 94 toward the case member 58; and boss portions 98 (see Fig. 4) each formed at one of four corners of the side wall portion 94.

The side wall portion 94 is across the Z direction. The side wall portion 94 has a plurality of protrusions 94a protruding toward the second battery unit 64, and a plurality of through-holes 94b (see Fig. 4). The protrusions 94a have the same shape as the protrusions 66a. Referring to Fig. 4, in the present embodiment, a plurality of the protrusions 94a and a plurality of through-holes 94b are arranged so that one protrusion 94a and three through-holes 94b alternate each other in the X direction.

Referring to Fig. 4 through Fig. 6, the circumferential wall portion 96 includes a first wall portion 96a and a second wall portion 96b opposing to each other in the X direction, and a third wall portion 96c and a fourth wall portion 96d opposing to each other in the Y direction. Referring to Fig. 5 and Fig. 6, the circumferential wall portion 96 has a salient 96f at an edge portion 96e on the case member 58 side. The salient 96f is a loop when viewed from the case member 58 side (in a view from the Z direction). The salient 96f protrudes toward the case member 58.

In the present embodiment, the side wall portion 94 has a larger area in a view from the Z direction than whichever area of the first wall portion 96a in a view from the X direction, of the second wall portion 96b in a view from the X direction, of the third wall portion 96c in a view from the Y direction and of the fourth wall portion 96d in a view from the Y direction. In other words, an outer surface area of the first wall portion 96a, an outer surface area of the second wall portion 96b, an outer surface area of the third wall portion 96c and an outer surface area of the fourth wall portion 96d are all smaller than an outer surface area of the side wall portion 94. An area of the first wall portion 96a in a view from the X direction and an area of the second wall portion 96b in a view from the X direction are each smaller than an area of the third wall portion 96c in a view from the Y direction, as well as than an area of the fourth wall portion 96d in a view from the Y direction. A length of the first wall portion 96a in the Y direction and a length of the second wall portion 96b in the Y direction are each shorter than a length of the third wall portion 96c in the X direction as well as than a length of the fourth wall portion 96d in the X direction.

Referring to Fig. 4 through Fig. 6, the first battery unit 62 has a plurality of rechargeable batteries 100 disposed in parallel with each other, a battery holding portion 102 which holds the batteries 100, and a plurality of plate-like conductor members 104, 106, 108, 110 (see Fig. 5) which electrically connect the batteries 100. In the present embodiment, the first battery unit 62 has ninety eight batteries 100, seven conductor members 104, one conductor member 106, six conductor members 108, and one conductor member 110.

The batteries 100 are cylindrical, and are disposed in parallel to the Z direction. The batteries 100 are arranged in a plurality of rows across the X direction and in a plurality of columns across the Y direction. In the present embodiment, the batteries 100 are arranged in fourteen rows across the X direction and in seven columns across the Y direction, in a grid pattern.

In the following description of the batteries 100 in the first battery unit 62, the row which is closest to the first wall portion 68a (see Fig. 4 and Fig. 5) will be called the first row, and the row which is closest to the second wall portion 68b (see Fig. 5) will be called the fourteenth row. Also, the column which is closest to the third wall portion 68c (see Fig. 4 and Fig. 6) will be called the first column and the column which is closest to the fourth wall portion 68d (see Fig. 6) will be called the seventh column. In the present embodiment, the batteries 100 are held in the battery holding portion 102 in such a pattern that those batteries 100 disposed in the even-number rows and those disposed in the odd-number rows are oriented in opposite directions from each other. Specifically, for example, the batteries 100 in the first, third, fifth, seventh, ninth, eleventh and thirteenth rows are disposed so that their negative electrodes face the side wall portion 66, whereas the batteries 100 in the second, fourth, sixth, eighth, tenth, twelfth and fourteenth rows are disposed so that their positive electrodes face the side wall portion 66.

Referring to Fig. 4 and Fig. 5, one conductor member 104 is connected to first end portions (on the side wall portion 66 side, in the present embodiment) of the batteries 100 in the first row, and to first end portions (on the side wall portion 66 side, in the present embodiment) of the batteries 98 in the second row. This establishes electrically parallel connections of the first end portions of the batteries 100 in the first row, whereas it also establishes electrically parallel connections of the first end portions of the batteries 100 in the second row. Also, this establishes electrically series connection of the first end portions of the batteries 100 in the first row with the first end portions of the batteries 100 in the second row. In the same fashion, six conductor members 104 are connected to the first end portions of the batteries 100 in the third row through the fourteenth row. Specifically, one conductor member 104 is used to connect the batteries 100 in two rows.

Referring to Fig. 5, the batteries 100 in the first row have their second end portions (facing the side wall portion 72) connected with the conductor member 106. This establishes electrically parallel connections between the second end portions of the batteries 100 in the first row. The second end portions of the batteries 100 in the second row and the second end portions of the batteries 100 in the third row are connected by one of the conductor members 108. This establishes electrically parallel connections of the second end portions of the batteries 100 in the second row, whereas it also establishes electrically parallel connections of the second end portions of the batteries 100 in the third row. Also, this establishes electrically series connection of the second end portions of the batteries 100 in the second row with the second end portions of the batteries 100 in the third row. Likewise, five conductor members 108 are connected to the second end portions of the batteries 100 in the fourth row through the thirteenth row. Specifically, one conductor member 108 is used to connect the batteries 100 in two rows. The conductor member 110 is connected to the second end portions of the batteries 100 in the fourteenth row. This establishes electrically parallel connections between the second end portions of the batteries 100 in the fourteenth row.

The conductor members 104, 106, 108, 110 are, for example, welded to the batteries 100.

The battery holding portion 102 includes a generally rectangular parallelepiped (or rectangular parallelepiped) first holding portion 112, a generally rectangular parallelepiped (or rectangular parallelepiped) second holding portion 114, and a plurality of boss portions 116 (see Fig. 4) . Referring to Fig. 4, in the present embodiment, the first holding portion 112 has its four corners each provided with one of the boss portions 116. It should be noted here that Fig. 4 shows only three of the boss portions 116. The battery holding portion 102 and a battery holding portion 102a which will be described later are formed of an electrically insulating material such as resin.

Referring to Fig. 4 and Fig. 6, the first holding portion 112 has side-surface portions 118, 120 (see Fig. 6) each being across the Z direction and generally rectangular (or rectangular) in a side view (in a view from the Z direction); and a frame-like circumferential surface portion 122 which connects an outer circumferential edge of the side-surface portion 118 and an outer circumferential edge of the side-surface portion 120. The side-surface portion 118 faces the side wall portion 66 in the Z direction.

Referring to Fig. 4 and Fig. 5, the side-surface portion 118 includes a plurality (six, in the present embodiment) of protrusions 118a extending in the Y direction and protruding toward the side wall portion 66. In the present embodiment, the conductor members 104 and the protrusions 118a are arranged so that the conductor member 104 and the protrusion 118a alternate each other in the Y direction.

Referring to Fig. 4, the first holding portion 112 further has a plurality of screw holes 112a opening in the protrusions 118a. In the present embodiment, the screw holes 112a are arranged so that three of the screw holes 112a open in each of the protrusions 118a. The screw holes 112a are formed correspondingly to the through-holes 66b.

Referring to Fig. 4 through Fig. 6, the circumferential surface portion 122 includes a first surface portion 122a and a second surface portion 122b each being across the X direction, and a third surface portion 122c and a fourth surface portion 122d each being across the Y direction. The first surface portion 122a opposes to the first wall portion 68a in the X direction, the second surface portion 122b opposes to the second wall portion 68b in the X direction, the third surface portion 122c opposes to the third wall portion 68c in the Y direction, and the fourth surface portion 122d opposes to the fourth wall portion 68d in the Y direction.

Referring to Fig. 4 and Fig. 5, the first surface portion 122a includes a plurality (two, in the present embodiment) of protrusions 124 protruding toward the first wall portion 68a. The protrusions 124 are rectangular when viewed from the first wall portion 68a side (in a view from the X direction). The second surface portion 122b includes a plurality (two, in the present embodiment) of protrusions 126 protruding toward the second wall portion 68b (see Fig. 5). The protrusions 126 are rectangular when viewed from the second wall portion 68b side (in a view from the X direction). In the present embodiment, the first surface portion 122a and the second surface portion 122b are formed so that the protrusions 124 and the protrusions 126 overlap with each other when viewed from the X direction.

Referring to Fig. 4 and Fig. 6, the second holding portion 114 has side-surface portions 128, 130 (see Fig. 6) each being across the Z direction and generally rectangular (or rectangular) in a side view (in a view from the Z direction) ; and a frame-like circumferential surface portion 132 which connects an outer circumferential edge of the side-surface portion 128 and an outer circumferential edge of the side-surface portion 130. The side-surface portion 130 faces the side wall portion 72 in the Z direction.

Referring to Fig. 5, the side-surface portion 130 includes a plurality (seven, in the present embodiment) of protrusions 130a extending in the Y direction and protruding toward the side wall portion 72. In the present embodiment, the conductor members 106, 108, 110, and the protrusions 130a are arranged so that the conductor member and the protrusion 130a alternate each other in the Y direction.

Referring to Fig. 4 through Fig. 6, the circumferential surface portion 132 includes a first surface portion 132a and a second surface portion 132b each being across the X direction, and a third surface portion 132c and a fourth surface portion 132d each being across the Y direction. The first surface portion 132a opposes to the first wall portion 74a in the X direction, the second surface portion 132b opposes to the second wall portion 74b in the X direction, the third surface portion 132c opposes to the third wall portion 74c in the Y direction, and the fourth surface portion 132d opposes to the fourth wall portion 74d in the Y direction.

Referring to Fig. 4 and Fig. 5, the first surface portion 132a includes a plurality (two, in the present embodiment) of protrusions 134 protruding toward the first wall portion 74a. The protrusions 134 are rectangular when viewed from the first wall portion 74a (in a view from the X direction). Referring to Fig. 5, the second surface portion 132b includes a plurality (two, in the present embodiment but only one is shown in Fig. 5) of protrusions 136 protruding toward the second wall portion 74b. The protrusions 136 are rectangular when viewed from the second wall portion 74b side (in a view from the X direction) . In the present embodiment, the first surface portion 132a and the second surface portion 132b are formed so that the protrusions 134 and the protrusions 136 overlap with each other when viewed from the X direction. In the present embodiment, the protrusions 124, 126, 134, 136 are arranged so that the protrusion 124 and the adjacent protrusion 134 are flush with each other while the protrusion 126 and the adjacent protrusion 136 are flush with each other.

Referring to Fig. 4 through Fig. 6, the second battery unit 64 has substantially the same configuration as the first battery unit 62. The second battery unit 64 differs from the first battery unit 62 in that the second battery unit 64 includes a battery holding portion 102a in place of the battery holding portion 102. It should be noted here that the second battery unit 64 will be described only in terms of differences from the first battery unit 62. Arrangements common to those in the first battery unit 62 will not be repeated hereinafter.

Referring to Fig. 4 through Fig. 6, the battery holding portion 102a differs from the battery holding portion 102 in that it includes a first holding portion 138 in place of the first holding portion 112, and a second holding portion 140 in place of the second holding portion 114.

The first holding portion 138 differs from the first holding portion 112 in that it has a side-surface portion 142 in place of the side-surface portion 118 and that it does not have the screw holes 112a (see Fig. 4).

Referring to Fig. 4 and Fig. 5, the side-surface portion 142 differs from the side-surface portion 118 in that it has a plurality of protrusions 142a in place of the protrusions 118a. The protrusions 142a differ from the protrusions 118a in that they do not have openings (open ends of the screw holes 112a (see Fig. 4)) (since the first holding portion 138 does not have the screw holes 112a). The side-surface portion 142 faces the side wall portion 82 in the Z direction.

Referring to Fig. 5 and Fig. 6, the second holding portion 140 differs from the second holding portion 114 in that it has a side-surface portion 144 in place of the side-surface portion 130, and also it has a plurality of screw holes (not illustrated) correspondingly to the through-holes 94b (see Fig. 4) in the case member 60. The side-surface portion 144 faces the side wall portion 94 in the Z direction.

Referring to Fig. 5, the side-surface portion 144 differs from the side-surface portion 130 in that it has a plurality of protrusions 144a in place of the protrusions 130a. The protrusions 144a differ from the protrusions 130a in that they have unillustrated openings (open ends of screw holes). In the present embodiment, each of the protrusions 144a has three openings.

Referring to Fig. 5, the first surface portion 122a, the second surface portion 122b, the first surface portion 132a and the second surface portion 132b of the battery holding portion 102a oppose to the first wall portion 84a, the second wall portion 84b, the first wall portion 96a and the second wall portion 96b respectively in the X direction. Referring to Fig. 6, the third surface portion 122c, the fourth surface portion 122d, the third surface portion 132c and the fourth surface portion 132d of the battery holding portion 102a oppose to the third wall portion 84c, the fourth wall portion 84d, the third wall portion 96c and the fourth wall portion 96d respectively in the Y direction.

Referring to Fig. 4, the first battery unit 62 and the second battery unit 64 are connected with each other by a connecting unit 146. It should be noted here that Fig. 6 does not show the connecting unit 146 in order to avoid complication in the drawing.

Referring to Fig. 4, the connecting unit 146 includes a substrate 148 and a plurality of conductor members 150 fixed to the substrate 148. The connecting unit 146 is inserted into the through-hole 72b of the case member 56 and the through-hole 82b of the case member 58. The batteries 100 in the first battery unit 62 and the batteries 100 in the second battery unit 64 are electrically connected with each other via the conductor members 150. In the present embodiment, input and output of electrical power to and from the batteries 100 in the first battery unit 62 and the second battery unit 64 are performed via the positive power-supply terminal (not illustrated) and the negative power-supply terminal (not illustrated) provided in the case 52.

Referring to Fig. 4 through Fig. 6, the first battery unit 62 is encased by the case member 54 and the case member 56. The circumferential wall portion 68 of the case member 54 and the circumferential wall portion 74 of the case member 56 are fitted to each other with an annular seal member 152 sandwiched therebetween. More specifically, referring to Fig. 5 and Fig. 6, the salient 74f in the circumferential wall portion 74 is inserted into the recess 68f so that the seal member 152 is captured in the recess 68f in the circumferential wall portion 68. The seal member 152 provides watertight fitting between the case member 54 and the case member 56. The seal member 152 may be provided by a variety of gaskets. In the present embodiment, the seal member 152 may be provided by a gasket made of resin (rubber, plastic, etc.) or metal for example. The same description as made for the seal member 152 applies to seal members 154, 158a, 158b, 160, 162, 166, 170 which will be described later.

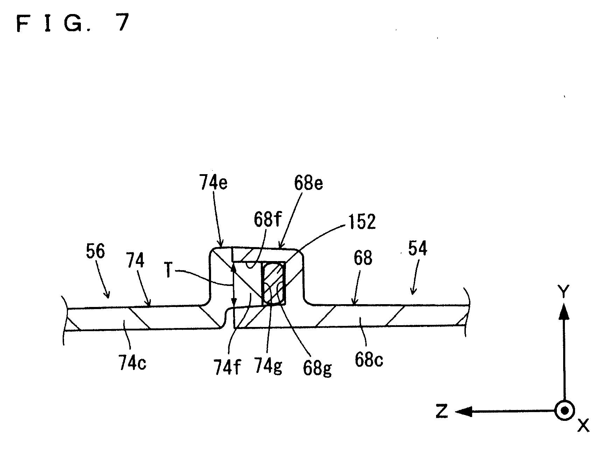

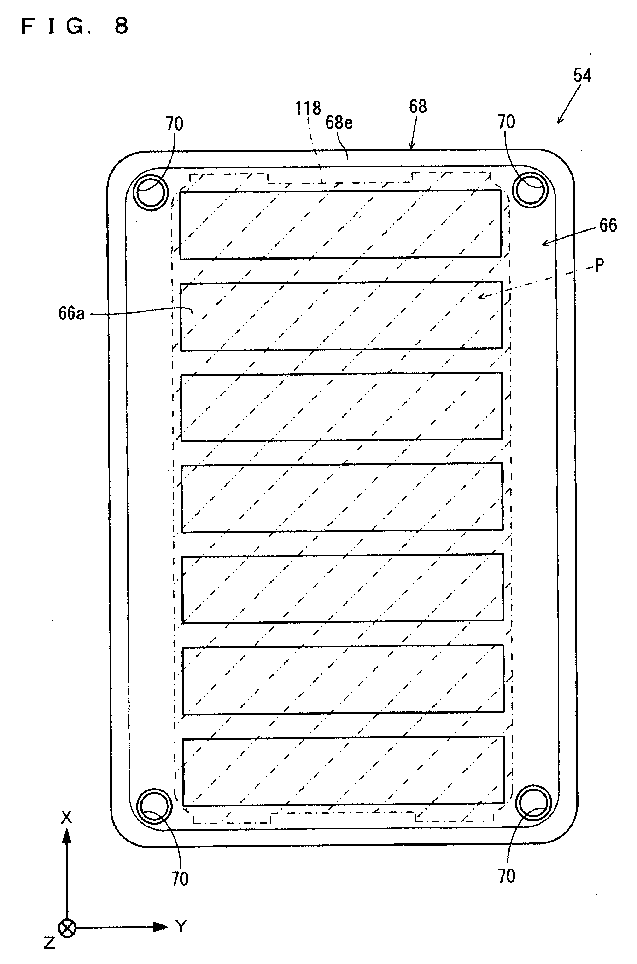

Fig. 7 shows a relationship between the circumferential wall portions 68, 74 and the seal member 152, whereas Fig. 8 shows the case member 54 viewed from a side (view from the Z direction). It should be noted here that in Fig. 8, hatching with alternate long and two short dashes lines represent a region P of the side wall portion 66 which overlaps the side-surface portion 118 of the battery holding portion 102 in a view from the Z direction. Note also that Fig. 8 does not show the through-holes 66b in order to avoid complication in the drawing.

Referring to Fig. 7, the seal member 152 is sandwiched by a bottom portion 68g of the recess 68f and a tip portion 74g of the salient 74f. The salient 74f has a maximum thickness T, which is greater than a thickness of the side wall portion 66 (see Fig. 5) of the case member 54 as well as greater than a thickness of the side wall portion 72 (see Fig. 5) of the case member 56. In the present embodiment, the thickness of the salient 74f refers to a dimension of the salient 74f in a direction perpendicular to the direction (Z direction in the present embodiment) in which the salient 74f protrudes. More specifically, referring to Fig. 5, for part of the salient 74f formed in the first wall portion 74a and in the second wall portion 74b, the thickness of the salient 74f refers to a thickness in the X direction. Referring to Fig. 6, for part of the salient 74f formed in the third wall portion 74c and in the fourth wall portion 74d, the thickness of the salient 74f refers to a thickness in the Y direction. Referring to Fig. 7, the maximum thickness T of the salient 74f refers to a maximum thickness of a part of the salient 74f which is inside the recess 68f. Referring to Fig. 8, the thickness of the side wall portion 66 in the present embodiment refers to an average thickness of the region P which is the region of the side wall portion 66 overlapping the side-surface portion 118 of the battery holding portion 102 in a view from the Z direction. In the present embodiment, the average thickness of the region P is calculated by dividing a volume of the region P by an area of the region P in a view from the Z direction. Likewise, the thickness of the side wall portion 72 refers to an average thickness of a region of the side wall portion 72 overlapping the side-surface portion 130 of the battery holding portion 102 in a view from the Z direction. The average thickness in the side wall portion 72 is calculated in the same method as for the average thickness of the region P.

In the present embodiment, the seal member 152 has a circular section when there is no force being applied externally thereto. The section of the seal member 152 has a greater diameter (when there is no force being applied externally to the seal member 152) than the maximum thickness T of the salient 74f.

Referring to Fig. 4 through Fig. 6, the second battery unit 64 is encased by the case member 58 and the case member 60. The circumferential wall portion 84 of the case member 58 and the circumferential wall portion 96 of the case member 60 are fitted to each other with an annular seal member 154 sandwiched therebetween. More specifically, referring to Fig. 5 and Fig. 6, the salient 96f in the circumferential wall portion 96 is inserted into the recess 84f so that the seal member 154 is captured in the recess 84f in the circumferential wall portion 84. The seal member 154 is sandwiched by a bottom portion of the recess 84f and a tip portion of the salient 96f. The seal member 154 provides watertight fitting between the case member 58 and the case member 60.

A relationship between the salient 96f and the side wall portion 82, and a relationship between the salient 96f and the side wall portion 94 are the same as a relationship between the salient 74f and the side wall portion 66 and a relationship between the salient 74f and the side wall portion 72. Specifically, the salient 96f has a maximum thickness which is greater than a thickness of the side wall portion 82 as well as than a thickness of the side wall portion 94. In the present embodiment, the thickness of the salient 96f refers to a dimension of the salient 96f in a direction perpendicular to the direction (Z direction in the present embodiment) in which the salient 96f protrudes. More specifically, referring to Fig. 5, for part of the salient 96f formed in the first wall portion 96a and in the second wall portion 96b, the thickness of the salient 96f refers to a thickness in the X direction. Referring to Fig. 6, for part of the salient 96f formed in the third wall portion 96c and in the fourth wall portion 96d, the thickness of the salient 96f refers to a thickness in the Y direction. The maximum thickness of the salient 96f refers to a maximum thickness of a part of the salient 96f which is inside the recess 84f. The thickness of the side wall portion 82 in the present embodiment refers to an average thickness of a region of the side wall portion 82 overlapping the side-surface portion 142 of the battery holding portion 102a in a view from the Z direction. Likewise, the thickness of the side wall portion 94 refers to an average thickness of a region of the side wall portion 94 overlapping the side-surface portion 144 of the battery holding portion 102a in a view from the Z direction. The average thickness in the side wall portion 82 and the side wall portion 94 is calculated in the same method as for the average thickness of the region P (see Fig. 8).

In the present embodiment, the seal member 154 has a circular section when there is no force being applied externally thereto. The section of the seal member 154 has a greater diameter (when there is no force being applied externally to the seal member 154) than the maximum thickness of the salient 96f.

Referring to Fig. 4, nuts 156a, 156b, 156c, 156d are provided between the case member 56 and the case member 58.

The nut 156a is housed in the boss portion 80a of the case member 56 and the boss portion 92a of the case member 58. The nut 156b is housed in the boss portion 80b of the case member 56 and the boss portion 92b of the case member 58. The boss portion 80a and the boss portion 92a are fitted to each other with an annular seal member 158a sandwiched therebetween, whereas the boss portion 80b and the boss portion 92b are fitted to each other with an annular seal member 158b sandwiched therebetween.

The nuts 156c, 156d are housed in the connecting portion 78 of the case member 56 and the connecting portion 88 of the case member 58. The nut 156c is sandwiched by the boss portion 80c and the boss portion 92c, whereas the nut 156d is sandwiched by the boss portion 80d and the boss portion 92d.

Referring to Fig. 4 and Fig. 6, the connecting portion 76 of the case member 56 and the connecting portion 86 of the case member 58 are fitted to each other with an annular seal member 160 sandwiched therebetween. More specifically, referring to Fig. 6, the salient 86b of the connecting portion 86 is inserted into the recess 76b so that the seal member 160 is captured in the recess 76b in the connecting portion 76. The seal member 160 is sandwiched by a bottom portion of the recess 76b and a tip portion of the salient 86b. The salient 86b has a maximum thickness which is greater than whichever thickness of the side wall portion 66, of the side wall portion 72, of the side wall portion 82 and of the side wall portion 94. In the present embodiment, the thickness of the salient 86b refers to a dimension of the salient 86b in a direction perpendicular to the direction (Z direction in the present embodiment) in which the salient 86b protrudes.

Referring to Fig. 4 through Fig. 6, the connecting portion 78 of the case member 56 and the connecting portion 88 of the case member 58 are fitted to each other with an annular seal member 162 sandwiched therebetween. More specifically, referring to Fig. 5 and Fig. 6, the salient 88b of the connecting portion 88 is inserted into the recess 78b so that the seal member 162 is captured in the recess 78b in the connecting portion 78. The seal member 162 is sandwiched by a bottom portion of the recess 78b and a tip portion of the salient 88b. The salient 88b has a maximum thickness which is greater than whichever thickness of the side wall portion 66, of the side wall portion 72, of the side wall portion 82 and of the side wall portion 94. In the present embodiment, the thickness of the salient 88b refers to a dimension of the salient 88b in a direction perpendicular to the direction (Z direction in the present embodiment)in which the salient 88b protrudes.

Referring to Fig. 4, the case 52 thus assembled as described above, is connected to the first battery unit 62 and the second battery unit 64 by a plurality of bolts 164.

In the present embodiment, four bolts 164 are inserted into the four boss portions 70 in the case member 54, the four boss portions 116 in the first battery unit 62, and the boss portions 80a, 80b, 80c, 80d in the case member 56. Likewise, four bolts 164 (Fig. 4 shows only three bolts 164) are inserted into the four boss portions 98 in the case member 60, the four boss portions 116 in the second battery unit 64, and boss portions 92a, 92b, 92c, 92d in the case member 58. The bolts 164 have their tip portions fixed by the corresponding nuts 156a, 156b, 156c, 156d. This binds the case 52, the first battery unit 62 and the second battery unit 64 together. It should be noted here that an annular seal member 166 is fitted into each of the boss portions 70 and each of the boss portions 98.

Referring to Fig. 5, in the battery pack 40 as bolted together as described above, the case member 54 has its inner surface 54a in contact with the protrusions 124 and the protrusions 126 in the battery holding portion 102. More specifically, the protrusions 124 are in contact with the first wall portion 68a of the circumferential wall portion 68, whereas the protrusions 126 are in contact with the second wall portion 68b of the circumferential wall portion 68. The case member 56 has its inner surface 56a in contact with the protrusions 134 and the protrusions 136 of the battery holding portion 102. More specifically, the protrusions 134 are in contact with the first wall portion 74a of the circumferential wall portion 74, whereas the protrusions 136 are in contact with the second wall portion 74b of the circumferential wall portion 74.

The case member 58 has its inner surface 58a in contact with the protrusions 124 and the protrusions 126 of the battery holding portion 102a. More specifically, the protrusions 124 are in contact with the first wall portion 84a of the circumferential wall portion 84, whereas the protrusions 126 are in contact with the second wall portion 84b of the circumferential wall portion 84. The case member 60 has its inner surface 60a in contact with the protrusions 134 and the protrusions 136 of the battery holding portion 102a. More specifically, the protrusions 134 are in contact with the first wall portion 96a of the circumferential wall portion 96, whereas the protrusions 136 are in contact with the second wall portion 96b of the circumferential wall portion 96.

The protrusion 66a of the side wall portion 66 is between one protrusion 118a and another protrusion 118a of the battery holding portion 102. This arrangement makes it possible to position the protrusions 66a and the conductor members 104 within proximity or in contact with each other. The protrusion 72a of the side wall portion 72 is between one protrusion 130a and another protrusion 130a of the battery holding portion 102. This arrangement makes it possible to position the protrusions 72a and the conductor member 108 within proximity or in contact with each other. The protrusion 82a of the side wall portion 82 is between one protrusion 142a and another protrusion 142a of the battery holding portion 102a. This arrangement makes it possible to position the protrusions 82a and the conductor members 104 within proximity or in contact with each other. The protrusion 94a of the side wall portion 94 is between one protrusion 144a and another protrusion 144a of the battery holding portion 102a. This arrangement makes it possible to position the protrusion 94a and the conductor members 108 within proximity or in contact with each other.

Referring to Fig. 4, the side wall portion 66 of the case member 54 is fixed to the battery holding portion 102 of the first battery unit 62 using a plurality (eighteen, in the present embodiment) of screws 168. Specifically, each screw 168 is inserted through one of the through-holes 66b of the side wall portion 66 via a seal member 170, and then threaded into the screw hole 112a of the first holding portion 112. Thus, referring to Fig. 5, the arrangement makes it possible to make the inner surface 54a of the case member 54 contact with the protrusions 118a of the battery holding portion 102. In the present embodiment, the side wall portion 66 is fixed to the side-surface portion 118 of the battery holding portion 102 at a plurality of positions in the X direction as well as a plurality of positions in the Y direction. More specifically, the side wall portion 66 is fixed to the battery holding portion 102 at six positions in the X direction and three positions in the Y direction.

Referring to Fig. 4, the side wall portion 94 of the case member 60 is fixed to the battery holding portion 102a of the second battery unit 64 using a plurality (twenty-one, in the present embodiment) of screws 168. Specifically, each screw 168 is inserted through one of the through-holes 94b of the side wall portion 94 via a seal member 170, and then threaded into the screw hole (not illustrated) of the second holding portion 140. Thus, referring to Fig. 5, the arrangement makes it possible to make the inner surface 60a of the case member 60 contact with the protrusions 144a of the battery holding portion 102a. In the present embodiment, the side wall portion 94 is fixed to the side-surface portion 144 of the battery holding portion 102a at a plurality of positions in the X direction as well as a plurality of positions in the Y direction. More specifically, the side wall portion 94 is fixed to the battery holding portion 102a at seven positions in the X direction and three positions in the Y direction.

The screws 168 serving as fixing members for fixing the side wall portions 66, 94 to the battery holding portions 102, 102a may be provided by ordinary screws (bolts), or special screws such as tapping screws.

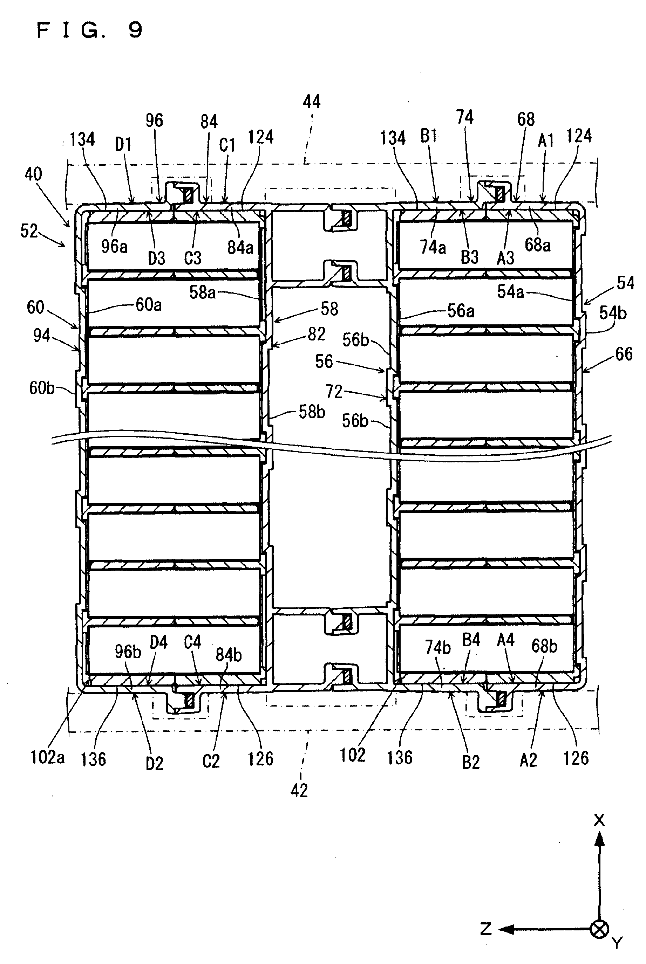

Fig. 9 shows a relationship between the battery pack 40 and the support members 42, 44 (see Fig. 2).

Referring to Fig. 9, in the present embodiment, the support members 42, 44 support an outer surface 54b of the case member 54, an outer surface 56b of the case member 56, an outer surface 58b of the case member 58, and an outer surface 60b of the case member 60. Therefore, in the case member 54, the outer surface 54b includes a region A1 which makes contact with the support member 44 and a region A2 which makes contact with the support member 42, and these regions A1, A2 function as load receiving portions for receiving load from outside (i.e. the support members 42, 44 in the present embodiment) of the battery pack 40. In the case member 56, outer surface 56b includes a region B1 which makes contact with the support member 44 and a region B2 which makes contact with the support member 42, and these regions B1, B2 function as load receiving portions. In the case member 58, outer surface 58b includes a region C1 which makes contact with the support member 44 and a region C2 which makes contact with the support member 42, and these regions C1, C2 function as load receiving portions. In the case member 60, outer surface 60b includes a region D1 which makes contact with the support member 44 and a region D2 which makes contact with the support member 42, and these regions D1, D2 function as load receiving portions.

More specifically, the support member 44 supports the first wall portion 68a of the case member 54, the first wall portion 74a of the case member 56, the first wall portion 84a of the case member 58, and the first wall portion 96a of the case member 60. Also, the support member 42 supports the second wall portion 68b of the case member 54, the second wall portion 74b of the case member 56, the second wall portion 84b of the case member 58, and the second wall portion 96b of the case member 60. Therefore, in the present embodiment, the first wall portion 68a has a load receiving portion. The first wall portion 74a has a load receiving portion. The first wall portion 84a has a load receiving portion. The first wall portion 96a has a load receiving portion. The second wall portion 68b has a load receiving portion. The second wall portion 74b has a load receiving portion. The second wall portion 84b has a load receiving portion. The second wall portion 96b has a load receiving portion. Also, the circumferential wall portion 68 has a load receiving portion. The circumferential wall portion 74 has a load receiving portion. The circumferential wall portion 84 has a load receiving portion. The circumferential wall portion 96 has a load receiving portion.

The load which is transmitted from the support members 42, 44 to the case member 54 is then transmitted through the inner surface 54a of the case member 54 and the protrusions 124, 126 of the battery holding portion 102, to the battery holding portion 102. Therefore, in the case member 54, a plurality (two, in the present embodiment) of regions A3 in the inner surface 54a which make contact with the protrusions 124, and a plurality (two, in the present embodiment) of regions A4 in the inner surface 54a which make contact with the protrusions 126 function as load transmitting portions for transmitting the load, which is received by the load receiving portions (the regions A1, A2, in the present embodiment) to the battery holding portion 102.

The load which is transmitted from the support members 42, 44 to the case member 56 is then transmitted through the inner surface 56a of the case member 56 and the protrusions 134, 136 of the battery holding portion 102, to the battery holding portion 102. Therefore, in the case member 56, a plurality (two, in the present embodiment) of regions B3 in the inner surface 56a which make contact with the protrusions 134, and a plurality (two, in the present embodiment) of regions B4 in the inner surface 56a which make contact with the protrusions 136 function as load transmitting portions for transmitting the load, which is received by the load receiving portions (the regions B1, B2, in the present embodiment), to the battery holding portion 102.

The load which is transmitted from the support members 42, 44 to the case member 58 is then transmitted through the inner surface 58a of the case member 58 and the protrusions 124, 126 of the battery holding portion 102a, to the battery holding portion 102a. Therefore, in the case member 58, a plurality (two, in the present embodiment) of regions C3 in the inner surface 58a which make contact with the protrusions 124, and a plurality (two, in the present embodiment) of regions C4 in the inner surface 58a which make contact with the protrusions 126 function as load transmitting portions for transmitting the load, which is received by the load receiving portions (the regions C1, C2, in the present embodiment), to the battery holding portion 102a.

The load which is transmitted from the support members 42, 44 to the case member 60 is then transmitted through the inner surface 60a of the case member 60 and the protrusions 134, 136 of the battery holding portion 102a, to the battery holding portion 102a. Therefore, in the case member 60, a plurality (two, in the present embodiment) of regions D3 in the inner surface 60a which make contact with the protrusions 134, and a plurality (two, in the present embodiment) of regions D4 in the inner surface 60a which make contact with the protrusions 136 function as load transmitting portions for transmitting the load, which is received by the load receiving portions (the regions D1, D2, in the present embodiment), to the battery holding portion 102a.

In the present embodiment, the first wall portion 68a has a load transmitting portion. The first wall portion 74a has a load transmitting portion. The first wall portion 84a has a load transmitting portion. The first wall portion 96a has a load transmitting portion. The second wall portion 68b has a load transmitting portion. The second wall portion 74b has a load transmitting portion. The second wall portion 84b has a load transmitting portion. The second wall portion 96b has a load transmitting portion. Also, the circumferential wall portion 68 has a load transmitting portion. The circumferential wall portion 74 has a load transmitting portion. The circumferential wall portion 84 has a load transmitting portion. The circumferential wall portion 96 has a load transmitting portion.

In the present embodiment, the regions A3, the regions A4, the regions C3 and the regions C4 each represent the first load transmitting portion, whereas the regions B3, the regions B4, regions D3 and the regions D4 each represent the second load transmitting portion.

Hereinafter, functions and advantages of the battery pack 40 will be described.

In the battery pack 40, the case member 54 and the case member 56 are fitted to each other so that the seal member 152 and the salient 74f of the circumferential wall portion 74 are captured in the recess 68f of the circumferential wall portion 68. The maximum thickness T of the salient 74f in the circumferential wall portion 74 is greater than the thickness of the side wall portion 66 in the case member 54 as well as than the thickness of the side wall portion 72 in the case member 56. By increasing the thickness of the salient 74f as in the above arrangement, it becomes possible to increase stiffness of the connecting portion where the case member 54 and the case member 56 are connected with each other. Likewise, the case member 58 and the case member 60 are fitted to each other so that the seal member 154 and the salient 96f of the circumferential wall portion 96 are captured in the recess 84f of the circumferential wall portion 84. The maximum thickness of the salient 96f in the circumferential wall portion 96 is greater than the thickness of the side wall portion 82 in the case member 58 as well as than the thickness of the side wall portion 94 in the case member 60. This increases stiffness of a connecting portion where the case member 58 and the case member 60 are connected with each other. As a result of these, even if there is a load applied from outside to the case 52, it is possible to reduce deformation of the case 52, and so it is possible to ensure sufficient waterproofing performance of the battery pack 40. Also, by increasing the thickness of the salient 74f, it is possible to provide sufficient stiffness in the connecting portion where the case member 54 and the case member 56 are connected with each other even if the case members 54 , 56 are formed of a light-weight material (resin for example) Likewise, by increasing the thickness of the salient 96f, it is possible to provide sufficient stiffness in the connecting portion where the case member 58 and the case member 60 are connected with each other even if the case members 58, 60 are formed of a light-weight material (resin for example). As a result of these, it is possible to reduce the weight of the case 52 while ensuring the strength of the case 52. Also, since it is possible to ensure the strength of the case 52 by increasing the thickness of the salients 74f, 96f, there is no need for increasing the thickness of the side wall portions 66, 72, 82, 94 for ensuring the strength of the case 52. This prevents decrease in heat radiation performance of the case 52.

The case member 54 and the case member 56 are assembled to each other by connecting the circumferential wall portion 68 and the circumferential wall portion 74 with each other, whereas the case member 58 and the case member 60 are assembled to each other by connecting the circumferential wall portion 84 and the circumferential wall portion 96 with each other. In this case, it is possible to increase stiffness of the case 52 sufficiently by giving appropriate thicknesses to the circumferential wall portions 68, 74, 84, 96 even if the thicknesses of the side wall portions 66, 72, 82, 94 are reduced. This makes it possible to improve heat radiation performance of the case 52 while ensuring sufficient strength of the case 52.

Each of the side wall portions 66, 72, 82, 94 is across the Z direction. In other words, each of the side wall portions 66, 72, 82, 94 extends at least in the X direction and the Y direction. In the battery pack 40, the batteries 100 are arranged in a plurality of rows in the X direction and in a plurality of columns in the Y direction. In this case, the case 52 has increased dimensions in the X direction and in the Y direction, so the side wall portions 66, 72, 82, 94 which extend in the X direction and the Y direction also have increased areas. This increases the amount of heat released from the side wall portions 66, 72, 82, 94, so the arrangement improves heat radiation performance of the case 52.

Generally, the case of a battery pack is designed as an assembly of two or a greater number of members for ease of manufacture of the battery pack. In the battery pack 40, the case 52 is divided into the case members 54, 56, 58, 60 in the Z direction, so it is not necessary to divide the case 52 in the X direction or in the Y direction. Therefore, it is not necessary to divide the side wall portions 66, 72, 82, 94 in the X direction or in the Y direction. In this case, side wall portions 66, 72, 82, 94 have improved heat conductivity than in the case where each side wall portion is divided. This increases the amount of heat released from the side wall portions 66, 72, 82, 94, so the arrangement makes it possible to improve heat radiation performance of the case 52.

In the battery pack 40, each of the outer surfaces 54b, 56b, 58b, 60b of the case members 54, 56, 58, 60 has a load receiving portion. Specifically, the case 52 has its outer surface provided with load receiving portions. As has been described earlier, it is possible to ensure sufficient strength of the case 52 in the battery pack 40. Therefore, it is possible to sufficiently reduce deformation of the case 52 by providing load receiving portions on the outer surface of the case 52 regardless of the direction in which the battery pack 40 is disposed (horizontal or vertical, for example).

As a result of the above, it is possible to sufficiently ensure heat radiation performance of the battery pack 40; to reduce weight of the battery pack 40 itself; and to ensure sufficient waterproofing performance of the battery pack 40 even if load is applied externally to the case 52.

In the battery pack 40, the load which the case member 54 receives at the region A1 of the outer surface 54b from the support member 44 is transmitted to the battery holding portion 102 via the regions A3 of the inner surface 54a, whereas the load which the case member 54 receives in the region A2 of the outer surface 54b from the support member 42 is transmitted to the battery holding portion 102 via the regions A4 of the inner surface 54a. In other words, the case member 54 is supported by the battery holding portion 102, at the regions A3, A4. This reduces deformation of the case member 54. Likewise, the load which the case member 56 receives at the regions B1, B2 is transmitted to the battery holding portion 102 via the regions B3, B4. In other words, the case member 56 is supported by the battery holding portion 102, at the regions B3, B4. This reduces deformation of the case member 56. The load which the case member 58 receives at the regions C1, C2 is transmitted to the battery holding portion 102a via the regions C3, C4, whereas the load which the case member 60 receives at the regions D1, D2 is transmitted to the battery holding portion 102a via the regions D3, D4. In other words, the case member 58 is supported by the battery holding portion 102a, at the regions C3, C4, whereas the case member 60 is supported by the battery holding portion 102a, at the regions D3, D4. This reduces deformation of the case members 58, 60. As a result of these, it becomes possible to sufficiently reduce deformation of the case 52.

In the battery pack 40, the side wall portion 66 is fixed to the battery holding portion 102, and therefore it is possible to increase stiffness of the side wall portion 66. Likewise, the side wall portion 94 is fixed to the battery holding portion 102a, and therefore it is possible to increase stiffness of the side wall portion 94. As a result of these, it becomes possible to sufficiently increase stiffness of the case 52. Since it is possible to sufficiently reduce deformation of the case 52, it is possible to further improve waterproofing performance of the battery pack 40. Also, it is possible to transmit heat, which is generated in the batteries 100, efficiently from the battery holding portions 102, 102a to the case 52 (the side wall portions 66, 94). This makes it possible to further improve heat radiation performance of the battery pack 40.

According to the battery pack 40, it is possible to receive load, which is applied from outside to the case 52, at the circumferential wall portions 68, 74, 84, 96. In other words, it is possible to receive the load which is applied from outside to the case 52, in a distributed fashion by the case members 54, 56, 58, 60. This prevents situations where there is significant difference in the amount of load transmitted from outside to the case members 54, 56, 58, 60 and therefore prevents situations where there is significant difference in the amount of deformation caused in the respective case members 54, 56, 58, 60. As a result, it is possible to sufficiently reduce decrease in waterproofing performance at the connecting portion between the case member 54 and the case member 56, as well as between the case member 58 and the case member 60. Consequently, it is possible to sufficiently improve waterproofing performance of the battery pack 40.

As has been described, according to the battery pack 40, it is possible to receive load, which is applied from outside to the case 52, at the circumferential wall portions 68, 74, 84, 96. In other words, it is possible to receive load, which is applied from outside to the case 52, at regions near the connecting portion between the case member 54 and the case member 56, and at regions near the connecting portion between the case member 58 and the case member 60. As described, in the battery pack 40, sufficiently high stiffness is ensured at the connecting portion between the case member 54 and the case member 56, as well as the connecting portion between the case member 58 and the case member 60. Therefore, it is possible to sufficiently reduce deformation of the case 52 by receiving load, which is applied from outside to the case 52, at regions near the connecting portion between the case member 54 and the case member 56, and at regions near the connecting portion between the case member 58 and the case member 60.

In the battery pack 40, the section of the seal member 152 has a greater diameter than the maximum thickness T of the salient 74f. This ensures sufficient waterproofing performance between the recess 68f and the salient 74f. Likewise, since the section of the seal member 154 has a greater diameter than the maximum thickness of the salient 96f, sufficient improvement is ensured in waterproofing performance between the recess 84f and the salient 96f.

In the battery pack 40, the seal member 152 is sandwiched by the bottom portion 68g of the recess 68f and the tip portion 74g of the salient 74f. In this case, it is possible to reliably hold the seal member 152 by the bottom portion 68g of the recess 68f and the tip portion 74g of the salient 74f, and so it is possible to further improve waterproofing performance between the recess 68f and the salient 74f. Likewise, the seal member 154 is sandwiched by the bottom portion of the recess 84f and the tip portion of the salient 96f. This makes it possible to further improve waterproofing performance between the recess 84f and the salient 96f.

In the embodiment described above, each of the outer surfaces 54b, 56b, 58b, 60b of the respective case members 54, 56, 58, 60 has a load receiving portion. However, there may be an arrangement where only one, two or three of the outer surfaces 54b, 56b, 58b, 60b have load receiving portion(s).

In the embodiment described above, each of the inner surfaces 54a, 56a, 58a, 60a of the respective case members 54, 56, 58, 60 has a load transmitting portion. However, there may be an arrangement where only one, two or three of the inner surfaces 54a, 56a, 58a, 60a have load transmitting portion(s).

In the embodiment described above, the side wall portion 66 is fixed to the battery holding portion 102, and the side wall portion 94 is fixed to the battery holding portion 102a. However, it is not necessary that the side wall portion 66 is fixed to the battery holding portion 102, nor is it necessary that the side wall portion 94 is fixed to the battery holding portion 102a, either. Also, the side wall portion 72 may be fixed to the battery holding portion 102, or the side wall portion 82 may be fixed to the battery holding portion 102a. Specifically, for example, the screws 168 may be used to fix the side wall portion 72 to the battery holding portion 102, or the screws 168 may be used to fix the side wall portion 82 to the battery holding portion 102a.

In the embodiment described above, the battery pack 40 (the case 52) is supported by the body frame 12 via the support members 42, 44. However, the battery pack 40 (the case 52) may be supported directly by the body frame 12. In this case, a region(s) of the case 52 supported by the body frame 12 (region(s) contacting the body frame 12) serves as a load receiving portion(s).

Attitude of the battery pack 40 in the state where the battery pack 40 is mounted in the scooter is not limited to the example described above.

For example, the battery pack 40 may be disposed in such a pattern that the first wall portions 68a, 74a, 84a, 96a face upward direction or obliquely in an upward and forward direction while the second wall portions 68b, 74b, 84b, 96b face downward direction or obliquely downward and rearward direction. For another example, the battery pack 40 may be disposed in such a pattern that the first wall portions 68a, 74a, 84a, 96a face downward direction, obliquely in a downward and rearward direction or obliquely in a downward and forward direction while the second wall portions 68b, 74b, 84b, 96b face upward direction, obliquely in an upward and forward direction or obliquely in an upward and rearward direction.

For another example, the battery pack 40 may be disposed in such a pattern that the side wall portion 66 faces rightward and the side wall portion 94 faces leftward. For still another example, the battery pack 40 may be disposed in such a pattern that the side wall portion 66 faces forward, obliquely in a forward and upward direction, or obliquely in a forward and downward direction while the side wall portion 94 faces rearward direction, obliquely in a rearward and downward direction, or obliquely in a rearward and upward direction. For still another example, the battery pack 40 may be disposed in such a pattern that the side wall portion 66 faces rearward direction, obliquely in a rearward and upward direction, or obliquely in a rearward and downward direction while the side wall portion 94 faces forward, obliquely in a forward and downward direction, or obliquely in a forward and upward direction.

In the embodiment described above, description was made for a case where the battery pack 40 is placed vertically in the scooter 10. However, the battery pack 40 may be placed horizontally in a scooter (saddle type vehicle). For example, the battery pack 40 may be mounted in the scooter with the side wall portion 66 facing upward, or the battery pack 40 may be mounted in the scooter with the side wall portion 94 facing upward. In this case again, as support members support at least one of the circumferential wall portions 68, 74, 84, 96, the arrangement offers the same functions as described above for the case where the battery pack 40 is placed vertically. Therefore, it is possible to sufficiently prevent deformation of the case 52 even if there is a load applied from outside to the case 52 in the fore-aft direction or in left-right direction.

In the embodiment described above, the side wall portions 66, 72, 82, 94 have their longitudinal sides parallel to the X direction while the side wall portions 66, 72, 82, 94 have their lateral sides parallel to the Y direction. However, the battery pack may be configured so that the side wall portions have their lateral sides parallel to the X direction and their longitudinal sides parallel to the Y direction.

In the embodiment described above, the case 52 is fixed to the battery holding portions 102, 102a using fixing members provided by the screws 168. However, pins or other members may be used as the fixing members. Also, the case may be fixed to the battery holding portion by welding (thermal, ultrasonic, etc.) for example.

In the embodiment described above, a plurality of screws 168 are used to fix the case 52 and the battery holding portions 102, 102a. However, welding may be employed for example, to fix the case 52 and the conductor members 104, 106, 108, 110. A thermally conductive sheet or filler (thermally conductive adhesive) may be added between the case 52 and the battery holding portions 102, 102a.

Load receiving portion(s) may be included in any one or all of the third wall portions 68c, 74c, 84c, 96c. Also, load receiving portion(s) may be included in any one or all of the fourth wall portions 68d, 74d, 84d, 96d.

Load transmitting portion(s) may be included in any one or all of the third wall portions 68c, 74c, 84c, 96c. Also, load transmitting portion (s) may be included in any one or all of the fourth wall portions 68d, 74d, 84d, 96d.

The batteries 100 may be arranged in such a pattern that not less than two of the batteries 100 are placed in the Z direction in the battery holding portion.

In the embodiment described above, description was made for a case that the circumferential wall portion protrudes in the Z direction from the outer circumferential edge of the side wall portion. However, position of the circumferential wall portion is not limited by the above embodiment. For example, the circumferential wall portion may protrude in the Z direction, from a slightly inner region than the outer circumferential edge of the side wall portion. Specifically, there may be an arrangement where the circumferential wall portion protrudes in the Z direction, from an outer circumferential edge portion of the side wall portion. It should be noted here that the outer circumferential edge portion of the side wall portion includes the outer circumferential edge of the side wall portion.

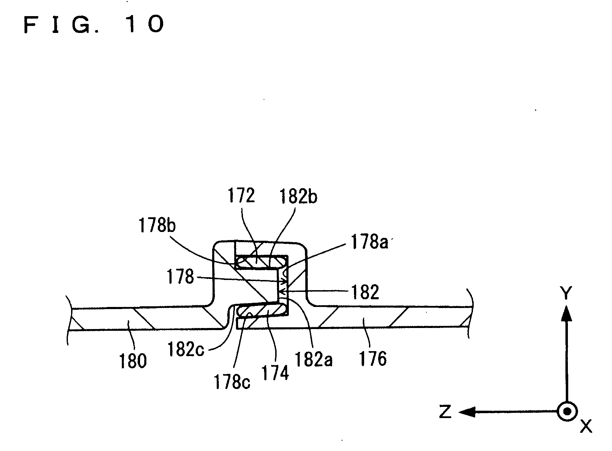

In the embodiment described above, description was made for a case where the seal members (seal members 152, 154) are sandwiched by bottom portions of the recesses (recesses 68f, 84f) in the first circumferential wall portions (circumferential wall portions 68, 84) and tip portions of the salients (salients 74f, 96f) in the second circumferential wall portions (circumferential wall portions 74, 96). However, the manner in which the seal members which are sandwiched by the first circumferential wall portion's recess and the second circumferential wall portion's salient is not limited to the one described in the above embodiment. For example, as shown in Fig. 10, there may be a pair of annular seal members 172, 174 which are sandwiched by the recess 178 of the first circumferential wall portion 176 and the salient 182 of the second circumferential wall portion 180.

Referring to Fig. 10, the recess 178 has substantially the same shape as the recesses 68f, 84f described earlier, and includes a bottom portion 178a, an outer circumferential portion 178b and an inner circumferential portion 178c. The bottom portion 178a is annular in a view from the Z direction. The outer circumferential portion 178b extends in the Z direction from an outer edge of the bottom portion 178a. The inner circumferential portion 178c extends in the Z direction from an inner edge of the bottom portion 178a. The salient 182 has substantially the same shape as the salients 74f, 96f described earlier, and includes a tip portion 182a, an outer circumferential portion 182b and an inner circumferential portion 182c. The tip portion 182a is annular in a view from the Z direction. The outer circumferential portion 182b extends in the Z direction from an outer edge of the tip portion 182a. The inner circumferential portion 182c extends in the Z direction from an inner edge of the tip portion 182a.

The seal member 172 is sandwiched by the outer circumferential portion 178b of the recess 178 and the outer circumferential portion 182b of the salient 182, whereas the seal member 174 is sandwiched by the inner circumferential portion 178c of the recess 178 and the inner circumferential portion 182c of the salient 182. The example in Fig. 10 sufficiently improves waterproofing performance between the recess 178 and the salient 182, by the pair of seal members 172, 174. It should be noted here that the seal member may be provided only between the outer circumferential portion of the recess and the outer circumferential portion of the salient or only between the inner circumferential portion of the recess and the inner circumferential portion of the salient.

In the embodiment described above, description was made for a case where the salient is clearly recognizable in the second circumferential wall portion. However, the second circumferential wall portion is not limited by the example described. For example, the entire second circumferential wall portion including the salient may have a uniform thickness. In this case, the salient is provided by a portion inside the recess of the first circumferential wall portion of the second circumferential wall portion.

The saddle type vehicle to which the present invention is applicable is not limited to the scooter 10. Specifically, the present invention is applicable to other kinds of saddle type vehicles including other types of motorcycles such as mopeds; all-terrain vehicles; snowmobiles; and others.

The present invention being thus far described in terms of preferred embodiments, it is obvious that these may be varied in many ways within the scope of the present invention. The scope of the present invention is only limited by the accompanied claims.

### LEGEND

- 10: Scooter
- 12: Body frame
- 40: Battery pack
- 52: Case
- 54, 56, 58, 60: Case members
- 66, 72, 82, 94: Side wall portions
- 68, 74, 84, 96: Circumferential wall portions
- 68f, 76b, 78b, 84f, 178: Recesses
- 74f, 86b, 88b, 96f, 182: Salients
- 100: Battery
- 102, 102a: Battery holding portions
- 112, 138: First holding portions
- 114, 140: Second holding portions
- 152, 154, 158a, 158b, 160, 162, 166, 170: Seal members
- A1, A2, A2, A4, B1 B2, B3, B4,:
- C1, C2, C3, C4, D1, D2, D3, D4: Regions

## Claims

1. A battery pack (40) comprising:
a plurality of rechargeable batteries (100) arranged in a plurality of rows across a first direction as well as in a plurality of columns across a second direction which is perpendicular to the first direction;
a battery holding portion (102; 102a) for holding the batteries (100);
a case (52) including a first case member (54, 58) and a second case member (56, 60) which are assembled with each other in a third direction perpendicular to both of the first direction and the second direction, for encasing the batteries (100) and the battery holding portion (102; 102a); and
an annular seal member (152, 154) sandwiched by the first case member (54, 58) and the second case member (56, 60);
wherein at least one of the first case member (54, 58) and the second case member (56, 60) includes an outer surface (54b, 58b; 56b, 60b) having a load receiving portion (A1, A2, C1, C2; B1, B2, D1, D2) for receiving a load from outside of the battery pack (40),
the first case member (54, 58) includes a plate-like first side wall portion (66, 82) across the third direction, and a frame-like first circumferential wall portion (68, 84) protruding from an outer circumferential edge portion of the first side wall portion (66, 82) toward the second case member (56, 60),
the second case member (56, 60) includes a plate-like second side wall portion (72, 94) across the third direction, and a frame-like second circumferential wall portion (74, 96) protruding from an outer circumferential edge portion of the second side wall portion (72, 94) toward the first case member (54, 58),
the second circumferential wall portion (74, 96) has an annular salient (74f, 96f) protruding toward the first case member (54, 58), and
the first circumferential wall portion (68, 84) has an annular recess (68f, 84f) for holding the salient(74f, 96f) and the seal member (152, 154),
**characterized in that**
the salient (74f, 96f) of the second circumferential wall portion (74, 96) has a maximum thickness greater than a thickness of the first side wall portion (66, 82) as well as greater than a thickness of the second side wall portion (72, 94).

2. The battery pack (40) according to Claim 1, wherein at least one of the first case member (54, 58) and the second case member (56, 60) which includes the load receiving portion (A1, A2, C1, C2; B1, B2, D1, D2) has an inner surface (54a, 58a; 56a, 60a) having a load transmitting portion (A3, A4, C3, C4; B3, B4, D3, D4) for transmitting the load received by the load receiving portion (A1, A2, C1, C2; B1, B2, D1, D2) to the battery holding portion (102; 102a).

3. The battery pack (40) according to Claim 1 or 2, wherein at least one of the first side wall portion (66, 82) and the second side wall portion (72, 94) is fixed to the battery holding portion (102; 102a).

4. The battery pack (40) according to Claim 1, wherein at least one of the first circumferential wall portion (68, 84) and the second circumferential wall portion (74, 96) has the load receiving portion (A1, A2, C1, C2; B1, B2, D1, D2).

5. The battery pack (40) according to Claim 4, wherein each of the first circumferential wall portion (68, 84) and the second circumferential wall portion (74, 96) has the load receiving portion (A1, A2, C1, C2; B1, B2, D1, D2).

6. The battery pack (40) according to Claim 5, wherein the first case member (54, 58) has an inner surface (54a, 58a) having a first load transmitting portion (A3, A4, C3, C4) for transmitting a load received by the load receiving portion (A1, A2, C1, C2) of the first circumferential wall portion (68, 84) to the battery holding portion (102), whereas the second case member (56, 60) has an inner surface (56a, 60a) having a second load transmitting portion (B3, B4, D3, D4) for transmitting a load received by the load receiving portion (B1, B2, D1, D2) of the second circumferential wall portion (74, 96) to the battery holding portion (102a).

7. The battery pack (40) according to Claim 6, wherein at least one of the first side wall portion (66, 82) and the second side wall portion (72, 94) is fixed to the battery holding portion (102; 102a).

8. The battery pack (40) according to one of Claims 1 through 7, wherein the seal member (152, 154) has a circular section when there is no force being applied externally thereto, and the section of the seal member (152, 154) has a greater diameter than a maximum thickness of the salient (74f, 96f) in the second circumferential wall portion (74, 96) when there is no force being applied externally to the seal member (152, 154).

9. The battery pack (40) according to one of Claims 1 through 8, wherein the seal member (152, 154) is sandwiched by a bottom portion (68g) of the recess (68f, 84f) and a tip portion (74g) of the salient (74f, 96f).

10. A saddle type vehicle comprising the battery pack (40) according to one of Claims 1 through 9.

## Patentansprüche

1. Batteriepack (40), aufweisend:
eine Mehrzahl von wieder aufladbaren Batterien (100), angeordnet in einer Mehrzahl von Reihen quer zu einer ersten Richtung sowie in einer Mehrzahl von Säulen quer zu einer zweiten Richtung, die rechtwinklig zu der ersten Richtung ist;
einen Batteriehalteabschnitt (102, 102a) zum Halten der Batterien (100);
ein Gehäuse (52), enthaltend ein erstes Gehäuseteil (54, 58) und ein zweites Gehäuseteil (56, 60), die miteinander in einer dritten Richtung, rechtwinklig zu sowohl der ersten Richtung, als auch der zweiten Richtung zusammengebaut sind, zum Einhausen der Batterien (100) und des Batteriehalteabschnittes (102, 102a); und
ein ringförmiges Dichtungsteil (152, 154), zwischenliegend zwischen dem ersten Gehäuseteil (54, 58) und dem zweiten Gehäuseteil (56, 60);
wobei zumindest eines von dem ersten Gehäuseteil (54, 58) oder dem zweiten Gehäuseteil (56, 60) eine äußere Oberfläche (54b, 58b, 56b, 60b) enthält, die eine Lastaufnahmeabschnitt (A1, A2, C1, C2; B1, B2, D1, D2) zum Aufnehmen einer Last von außerhalb des Batteriepacks (40) hat, wobei
das erste Gehäuseteil (54, 58) einen plattenartigen ersten Seitenwandabschnitt (66, 82) quer zu der dritten Richtung und einen rahmenartigen ersten Umfangswandabschnitt (68, 84) enthält, der von einem äußeren Umfangskantenabschnitt des ersten Seitenwandabschnittes (68, 82) in Richtung zu dem zweiten Gehäuseteil (56, 60) vorspringt,
das zweite Gehäuseteil (58, 60) einen plattenartigen zweiten Seitenwandabschnitt (72, 94) quer zu der dritten Richtung und einen rahmenartigen zweiten Umfangswandabschnitt (74, 96) enthält, der von einem äußeren Umfangskantenabschnitt des zweiten Seitenwandabschnittes (72, 94) in Richtung zu dem ersten Gehäuseteil (54, 58) vorspringt,
wobei der zweite Umfangswandabschnitt (74, 96) eine ringförmigen Ausweitung (74f, 96f) hat, die in Richtung zu dem ersten Gehäuseteil (54, 58) vorspringt; und der erste Umfangswandabschnitt (68, 84) eine ringförmige Aussparung (68f, 84f) zum Halten der Ausweitung (74f, 96f) und des Dichtungsteils (152, 154) hat,
**dadurch gekennzeichnet, dass**
die Ausweitung (74f, 96f) des zweiten Umfangswandabschnittes (74, 96) eine maximale Dicke hat, die größer als eine Dicke des ersten Seitenwandabschnittes (68, 82) sowie größer als eine Dicke des zweiten Seitenwandabschnittes (72, 94) ist.

2. Batteriepack (40) nach Anspruch 1, wobei zumindest eines von dem ersten Gehäuseteil (54, 58) oder dem zweiten Gehäuseteil (56, 60), das den Lastaufnahmeabschnitt (A1, A2, C1, C2; B1, B2, D1, D2) hat, eine innere Oberfläche (54a, 58a; 56a, 60a) hat, die einen Lastübertragungsabschnitt (A3, A4, C3, C4; B3, B4, D3, D4) hat zum Übertragen der Last, aufgenommen durch den Lastaufnahmeabschnitt (A1, A2, C1, C2; B1, B2, D1, D2) zu dem Batteriehalteabschnitt (102, 102a).

3. Batteriepack (40) nach Anspruch 1 oder 2, wobei zumindest einer von dem ersten Seitenwandabschnitt (68, 82) oder dem zweiten Seitenwandabschnitt (72, 94) an dem Batteriehalteabschnitt (102, 102a) befestigt ist.

4. Batteriepack (40) nach Anspruch 1, wobei zumindest einer von dem ersten Umfangswandabschnitt (68, 84) oder dem zweiten Umfangswandabschnitt (74, 96) den Lastaufnahmeabschnitt (A1, A2, C1, C2; B1, B2, D1, D2) hat.

5. Batteriepack (40) nach Anspruch 4, wobei jeder von dem ersten Umfangswandabschnitt (68, 84) und dem zweiten Umfangswandabschnitt (74, 96) den Lastaufnahmeabschnitt (A1, A2, C1, C2; B1, B2, D1, D2) hat.

6. Batteriepack (40) nach Anspruch 5, wobei das erste Gehäuseteil (54, 58) eine innere Oberfläche (54a, 58a) hat, die einen Lastübertragungsabschnitt (A3, A4, C3, C4) hat zum Übertragen einer Last, empfangen durch den Lastaufnahmeabschnitt (A1, A2, C1, C2) des ersten Umfangswandabschnittes (68, 84), zu dem Batteriehalteabschnitt (102), wobei das zweite Gehäuseteil (56, 60) eine innere Oberfläche (56a, 60a) hat, die einen zweiten Lastübertragungsabschnitt (B3, B4, D3, D4) zum Übertragen einer Last hat, empfangen durch den Lastaufnahmeabschnitt (B1, B2, D1, D2) des zweiten Umfangswandabschnittes (74, 96), zu dem Batteriehalteabschnitt (102a).

7. Batteriepack (40) nach Anspruch 6, wobei zumindest einer von dem ersten Seitenwandabschnitt (68, 82) oder von dem zweiten Seitenwandabschnitt (72, 94) an dem Batteriehalteabschnitt (102, 102a) befestigt ist.

8. Batteriepack (40) nach einem der Ansprüche 1 bis 7, wobei das Dichtungsteil (152, 154) einen kreisförmigen Querschnitt hat, wenn es keine Kraft gibt, die darauf von außen aufgebracht wird, und der Querschnitt des Dichtungsteiles (152, 154) einen größeren Durchmesser als eine maximale Dicke der Ausweitung (74f, 96f) in dem zweiten Umfangswandabschnitt (74, 96) hat, wenn es keine Kraft gibt, die von außen auf das Dichtungsteil (152, 154) aufgebracht wird.

9. Batteriepack (40) nach einem der Ansprüche 1 bis 8, wobei das Dichtungsteil (152, 154) zwischen einem Bodenabschnitt (68g) der Aussparung (68f, 84f) und einem Spitzenabschnitt (74g) der Ausweitung (74f, 96f) dazwischen gelegt ist.

10. Fahrzeug vom Spreizsitz- Typ, aufweisend den Batteriepack (40) nach einem der Ansprüche 1 bis 9.

## Revendications

1. Bloc de batteries (40) comprenant :
une pluralité de batteries rechargeables (100) agencée en une pluralité de rangées dans une première direction tout comme en une pluralité de colonnes dans une deuxième direction qui est perpendiculaire à la première direction,
une partie de soutien des batteries (102 ; 102a) permettant de supporter les batteries (100),
un boîtier (52) incluant un premier élément de boîtier (54, 58) et un second élément de boîtier (56, 60) qui sont assemblés l'un à l'autre dans une troisième direction perpendiculaire à la fois à la première et à la deuxième direction, afin d'envelopper les batteries (100) et la partie de soutien des batteries (102 ; 102a), et
un élément d'étanchéité annulaire (152, 154) intercalé entre le premier élément de boîtier (54, 58) et le second élément de boîtier (56, 60),
dans lequel au moins l'un du premier élément de boîtier (54, 58) et du second élément de boîtier (56, 60) inclut une surface externe (54b, 58b ; 56b, 60b) comportant une partie de réception de charge (A1, A2, C1, C2 ; B1, B2, D1, D2) pour recevoir une charge provenant de l'extérieur du bloc de batteries (40),
le premier élément de boîtier (54, 58) inclut une première partie de paroi latérale (66, 82) ressemblant à une plaque dans la troisième direction et une première partie de paroi circonférentielle (68, 84) ressemblant à un châssis dépassant de la bordure circonférentielle externe de la première partie de paroi latérale (66, 82) vers le second élément de boîtier (56, 60),
le second élément de boîtier (56, 60) inclut une seconde partie de paroi latérale ressemblant à une plaque (72, 94) dans la troisième direction et une seconde partie de paroi circonférentielle ressemblant à un châssis (74, 96) dépassant de la bordure circonférentielle externe de la seconde partie de paroi latérale (72, 94) vers le premier élément de boîtier (54, 58),
la seconde partie de paroi circonférentielle (74, 96) possède une saillie annulaire (74f, 96f) dépassant vers le premier élément de boîtier (54, 58), et
la première partie de paroi circonférentielle (68, 84) possède un évidement annulaire (68f, 84f) afin de supporter la saillie (74f, 96f) et l'élément d'étanchéité (152, 154),
**caractérisé en ce que**
la saillie (74f, 96f) de la seconde partie de paroi circonférentielle (74, 96) présente une épaisseur maximale supérieure à l'épaisseur de la première partie de paroi latérale (66, 82) tout comme elle est supérieure à l'épaisseur de la seconde partie de paroi latérale (72, 94).

2. Bloc de batteries (40) selon la revendication 1, dans lequel au moins l'un du premier élément de boîtier (54, 58) et du second élément de boîtier (56, 60) qui inclut la partie de réception de charge (A1, A2, C1, C2 ; B1, B2, D1, D2) présente une surface interne (54a, 58a ; 56a, 60a) comportant une partie de transmission de charge (A3, A4, C3, C4 ; B3, B4, D3, D4) permettant de transmettre la charge reçue par la partie de réception de charge (A1, A2, C1, C2 ; B1, B2, D1, D2) vers la partie de soutien des batteries (102 ; 102a).

3. Bloc de batteries (40) selon la revendication 1 ou 2, dans lequel au moins l'une de la première partie de paroi latérale (66, 82) et de la seconde partie de paroi latérale (72, 94) est fixée à la partie de soutien des batteries (102 ; 102a).

4. Bloc de batteries (40) selon la revendication 1, dans lequel au moins l'une de la première partie de paroi circonférentielle (68, 84) et de la seconde partie de paroi circonférentielle (74, 96) comporte la partie de réception de charge (A1, A2, C1, C2 ; B1, B2, D1, D2).

5. Bloc de batteries (40) selon la revendication 4, dans lequel chacune de la première partie de paroi circonférentielle (68, 84) et de la seconde partie de paroi circonférentielle (74, 96) comporte la partie de réception de charge (A1, A2, C1, C2 ; B1, B2, D1, D2).

6. Bloc de batteries (40) selon la revendication 5, dans lequel le premier élément de boîtier (54, 58) présente une surface interne (54a, 58a) comportant une première partie de transmission de charge (A3, A4, C3, C4) chargée de transmettre une charge reçue par la partie de réception de charge (A1, A2, C1, C2) de la première partie de paroi circonférentielle (68, 84) vers la partie de soutien des batteries (102), alors que le second élément de boîtier (56, 60) présente une surface interne (56a, 60a) comportant une seconde partie de transmission de charge (B3, B4, D3, D4) chargée de transmettre une charge reçue par la partie de réception de charge (B1, B2, D1, D2) de la seconde partie de paroi circonférentielle (74, 96) vers la partie de soutien des batteries (102a).

7. Bloc de batteries (40) selon la revendication 6, dans lequel au moins l'une de la première partie de paroi latérale (66, 82) et de la seconde partie de paroi latérale (72, 94) est fixée à la partie de soutien des batteries (102 ; 102a).

8. Bloc de batteries (40) selon l'une des revendications 1 à 7, dans lequel l'élément d'étanchéité (152, 154) présente une section circulaire où il n'existe aucune force appliquée de manière externe, et la section de l'élément d'étanchéité (152, 154) présente un diamètre supérieur à l'épaisseur maximale de la saillie (74f, 96f) dans la seconde partie de paroi circonférentielle (74, 96) lorsqu'il n'existe aucune force appliquée de manière externe à l'élément d'étanchéité (152, 154).

9. Bloc de batteries (40) selon l'une des revendications 1 à 8, dans lequel l'élément d'étanchéité (152, 154) est intercalé entre une partie basse (68g) de l'évidement (68f, 84f) et une partie pointue (74g) de la saillie (74f, 96f).

10. Véhicule de type à chevaucher comprenant le bloc de batteries (40) conforme à l'une des revendications 1 à 9.
